(19) 

Europäisches Patentamt

European Patent Office

Office européen des brevets

(11) **EP 4 468 806 A1**

(12) **EUROPEAN PATENT APPLICATION**
published in accordance with Art. 153(4) EPC

(43) Date of publication:
 **27.11.2024 Bulletin 2024/48**

(21) Application number: **22922005.8**

(22) Date of filing: **04.10.2022**

(51) International Patent Classification (IPC):
 *H04W 72/0446* (2023.01)  *H04W 72/20* (2023.01)
 *H04W 74/08* (2024.01)  *H04W 28/04* (2009.01)

(52) Cooperative Patent Classification (CPC):
 **H04W 28/04; H04W 72/0446; H04W 72/20;**
 **H04W 74/08**

(86) International application number:
 **PCT/JP2022/037063**

(87) International publication number:
 **WO 2023/139852 (27.07.2023 Gazette 2023/30)**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **KH MA MD TN**

(30) Priority: **21.01.2022 JP 2022007977**

(71) Applicant: **Panasonic Intellectual Property**
 **Corporation**
 **of America**
 **Torrance, CA 90504 (US)**

(72) Inventors:
 • **MAKI, Shotaro**
  **Kadoma-shi, Osaka 571-0057 (JP)**
 • **YAMAMOTO, Tetsuya**
  **Kadoma-shi, Osaka 571-0057 (JP)**
 • **SUZUKI, Hidetoshi**
  **Kadoma-shi, Osaka 571-0057 (JP)**
 • **NISHIO, Akihiko**
  **Kadoma-shi, Osaka 571-0057 (JP)**
 • **HORIUCHI, Ayako**
  **Kadoma-shi, Osaka 571-0057 (JP)**

(74) Representative: **Grünecker Patent- und**
 **Rechtsanwälte**
 **PartG mbB**
 **Leopoldstraße 4**
 **80802 München (DE)**

(54) **TERMINAL, BASE STATION, AND COMMUNICATION METHOD**

(57) This terminal comprises: a reception circuit that receives control information corresponding to a downlink message in a random access procedure; and a control circuit that determines a setting for the repeated transmission of an uplink control signal for the downlink message, on the basis of a value of a field related to a setting different from the setting for the repeated transmission, in the control information.

200

207

202

```
CONTROLLER  →  RECEIVER
```

FIG. 2

EP 4 468 806 A1

**Description**

Technical Field

The present disclosure relates to a terminal, a base station, and a communication method.

Background Art

A communication system called the 5th generation mobile communication system (5G) has been studied. The 3rd Generation Partnership Project (3GPP), which is an international standards-developing organization, has been studying development of the 5G communication system in terms of both the development of LTE/LTE-Advanced systems and a New Radio Access Technology (also referred to as New RAT or NR), which is a new method not necessarily backward compatible with the LTE/LTE-Advanced systems (see, e.g., Non Patent Literature (hereinafter referred to as "NPL") 1).

Citation List

Non-Patent Literature

NPL 1
RP-181726, "Revised WID on New Radio Access Technology", NTT DOCOMO, September 2018
NPL 2
RP-19323 8, "New SID on Support of Reduced Capability NR Devices", Ericsson, December 2019
NPL 3
3GPP TS 38.213 V16.8.0, "NR; Physical layer procedures for control (Release 16)", 2021-12

Summary of Invention

However, there is room for study on a method for improving reception performance of an uplink signal.

A non-limiting embodiment of the present disclosure facilitates providing a terminal, a base station, and a communication method each capable of improving reception performance of an uplink signal.

A terminal according to an embodiment of the present disclosure includes: reception circuitry, which in operation, receives control information corresponding to a downlink message in a random access procedure; control circuitry, which in operation, determines a configuration of repetitive transmission of an uplink control signal for the downlink message based on a value of a field in the control information, the field being related to a configuration different from the configuration of repetitive transmission.

It should be noted that general or specific embodiments may be implemented as a system, an apparatus, a method, an integrated circuit, a computer program, a storage medium, or any selective combination thereof.

According to an embodiment of the present disclosure, it is possible to improve reception performance of an uplink signal.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a block diagram illustrating an exemplary configuration of a part of a base station;
FIG. 2 is a block diagram illustrating an exemplary configuration of a part of a terminal;
FIG. 3 is a block diagram illustrating an exemplary configuration of the base station;
FIG. 4 is a block diagram illustrating an exemplary configuration of the terminal;
FIG. 5 is a sequence diagram illustrating exemplary operations of the base station and the terminal according to Embodiment 1;
FIG. 6 illustrates an exemplary configuration of repetition factor according to Embodiment 1;

FIG. 7 illustrates another exemplary configuration of repetition factor according to Embodiment 1;

FIG. 8 illustrates still another exemplary configuration of repetition factor according to Embodiment 1;

FIG. 9 illustrates still another exemplary configuration of repetition factor according to Embodiment 1;

FIG. 10 illustrates still another exemplary configuration of repetition factor according to Embodiment 1;

FIG. 11 is a sequence diagram illustrating exemplary operations of the base station and the terminal according to Embodiment 2;

FIG. 12 illustrates an exemplary configuration of repetition factor according to Embodiment 2;

FIG. 13 illustrates another exemplary configuration of repetition factor according to Embodiment 2;

FIG. 14 illustrates still another exemplary configuration of repetition factor according to Embodiment 2;

FIG. 15 illustrates exemplary configurations of repetition factor and frequency hopping according to Embodiment 2;

FIG. 16 illustrates an exemplary architecture of a 3GPP NR system;

FIG. 17 schematically illustrates a functional split between NG-RAN and 5GC;

FIG. 18 is a sequence diagram of a Radio Resource Control (RRC) connection setup/reconfiguration procedure;

FIG. 19 is a schematic diagram illustrating a usage scenario of an enhanced Mobile BroadBand (eMBB), massive Machine Type Communications (mMTC), and Ultra Reliable and Low Latency Communications (URLLC); and

FIG. 20 is a block diagram illustrating an exemplary 5G system architecture for a non-roaming scenario.

Description of Embodiments

Hereinafter, embodiments of the present disclosure will be described in detail with reference to the accompanying drawings.

Note that, in the following description, a radio frame, a slot, and a symbol are each a physical resource unit in a time domain, for example. For example, the length of one frame may be 10 milliseconds. For example, one frame may be configured by a plurality (e.g., 10, 20, or another value) of slots. Further, for example, the number of slots configuring one frame may be variable depending on the slot length. Furthermore, for example, one slot may be configured by a plurality (e.g., 14 or 12) of symbols. For example, one symbol is the smallest physical resource unit in the time domain, and the symbol length may vary depending on subcarrier spacing (SCS).

Further, a subcarrier and a resource block (RB) are each a physical resource unit in a frequency domain. For example, one resource block may be configured by 12 subcarriers. For example, one subcarrier may be the smallest physical resource unit in the frequency domain. The subcarrier spacing is variable, and may be 15 kHz, 30 kHz, 60 kHz, 120 kHz, 240 kHz, or another value.

[Reduced Capability NR Devices]

In Release 17 (hereinafter, referred to as Rel-17 NR), a specification (e.g., Reduced Capability (RedCap)) is expected to be developed for realizing a terminal (e.g., NR terminal) whose power consumption or cost is reduced by limiting some of the functions or performance to support various use cases, compared to Release 15 or 16 (hereinafter, referred to as Rel-15/16 NR) (e.g., initial release of NR) (e.g., see NPL 2).

Such a terminal (e.g., also referred to as User Equipment (UE)) is sometimes referred to as a reduced capability NR device, RedCap, a RedCap terminal, NR-Lite, or NR-Light, for example.

[PUCCH for Msg. 4/Msg. B PDSCH of Rel-15/16]

A terminal of Rel-15/16 NR detects DCI format 1_0 on a downlink control channel (e.g., PDCCH: Physical Downlink Control Channel) in a Type-1 random access procedure (or also referred to as 4-step random access or 4-step RACH), for example. Note that Cyclic Redundancy Check (CRC) scrambled by, for example, Temporary Cell-Radio Network Temporary Identifier (TC-RNTI) may be attached to DCI format 1_0. Note that DCI is an abbreviation for "Downlink Control Information."

In a downlink data channel (e.g., PDSCH: Physical Downlink Shared Channel) scheduled by DCI format 1_0, the terminal receives information such as Message 4 (or also referred to as Msg. 4, Msg4, or UE contention resolution identity), for example. The terminal may, for example, determine whether information on the PDSCH has been correctly received, and transmit a response signal (e.g., Hybrid Automatic Repeat request (HARQ)-ACK or NACK), which is information on success or failure of the reception (or decoding), on an uplink control channel (e.g., PUCCH: Physical Uplink Control Channel).

A PUCCH resource used for transmitting the response signal may be selected, for example, from a PUCCH resource set provided by a higher layer signal (e.g., pucch-ResourceCommon). As an example, the PUCCH resource set may include 16 PUCCH resources (PUCCH resource candidates), and one of the 16 PUCCH resources may be determined based on PUCCH Resource Indicator (PRI) included in DCI format 1_0 and CCE index of a Control Channel Element (CCE) used for PDCCH.

Also, some of Rel-16 NR terminals detect DCI format 1_0 on PDCCH in a Type-2 random access procedure (or also referred to as 2-step random access or 2-step RACH), for example. Note that CRC scrambled by MsgB-RNTI may be attached to DCI format 1_0, for example.

In PDSCH scheduled by DCI format 1_0, the terminal receives, for example, information such as Message B (or also referred to as Msg. B, MsgB, successRAR, or fallbackRAR). For example, the terminal may determine whether information on PDSCH has been correctly received, and transmit HARQ-ACK or NACK, which is information on success or failure of the reception (or decoding), on PUCCH. Note that RAR is an abbreviation for "Random Access Response."

A PUCCH resource used for transmitting the response signal may be selected, for example, from a PUCCH resource set provided by a higher layer signal (e.g., pucch-ResourceCommon). As an example, the PUCCH resource set may include 16 PUCCH resources (PUCCH resource candidates), and one of the 16 PUCCH resources may be determined based on PRI included in successRAR.

For the PUCCH used for transmitting information (e.g., HARQ-ACK or NACK) on success or failure of reception of Msg. 4 (or also referred to as Msg. 4 PDSCH) and Msg. B (or also referred to as Msg. B PDSCH) in Rel-15/16, repetitive transmission (repetition) is not enabled, and frequency hopping (e.g., intra-slot frequency hopping) is enabled.

[PUCCH for Msg. 4/Msg. B PDSCH of Rel-17 RedCap terminal]

For the PUCCH used for transmitting information (e.g., HARQ-ACK or NACK) on success or failure of reception of Msg. 4 and Msg. B in a Rel-17 RedCap terminal, the repetitive transmission (repetition) is not enabled.

Further, in a Rel-17 RedCap terminal, frequency hopping (e.g., intra-slot frequency hopping) may be enabled or disabled for the PUCCH used for transmitting information on success or failure of reception of Msg. 4 and Msg. B in accordance with an indication of a base station (e.g., also referred to as gNB).

For example, in the case that frequency hopping is disabled for a PUCCH configured for a RedCap terminal, reception performance of PUCCH at the base station is possibly degraded.

Thus, in a non-limiting embodiment of the present disclosure, for example, a method for improving reception performance of PUCCH transmitted from a terminal will be described. For example, as the method for improving reception performance of PUCCH, repetition of PUCCH is expected. However, a method by which a base station indicates repetition of PUCCH to a terminal has not been sufficiently studied. In a non-limiting embodiment of the present disclosure, for example, a method for indicating (or configuring) information on repetition of PUCCH from a base station to a terminal will be described.

(Embodiment 1)

[Overview of Communication System]

A communication system according to the present embodiment includes base station 100 and terminal 200. Terminal 200 may be, for example, a RedCap terminal.

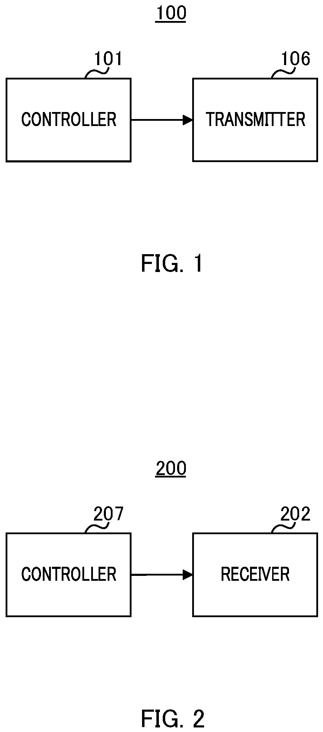

FIG. 1 is a block diagram illustrating an exemplary configuration of a part of base station 100 according to the present embodiment. In base station 100 illustrated in FIG. 1, transmitter 106 (e.g., corresponding to transmission circuitry) transmits control information (e.g., DCI or successRAR) corresponding to a downlink message (e.g., Msg. 4 or Msg. B) in a random access procedure. Controller 101 (e.g., corresponding to control circuitry) determines a configuration of reception of a repetitive transmission of an uplink control signal (e.g., signal of PUCCH) for the downlink message based on a value of a field in the control information related to a configuration different from the configuration of repetitive transmission.

FIG. 2 is a block diagram illustrating an exemplary configuration of a part of terminal 200 according to the embodiment. In terminal 200 illustrated in FIG. 2, receiver 202 (e.g., corresponding to reception circuitry) receives control information (e.g., DCI or successRAR) corresponding to a downlink message (e.g., Msg. 4 or Msg. B) in a random access procedure. Controller 206 (e.g., corresponding to control circuitry) determines a configuration of repetitive transmission of an uplink control signal (e.g., signal of PUCCH) for the downlink message based on a value of a field in the control information related to a configuration different from the configuration of repetitive transmission.

[Configuration of Base Station]

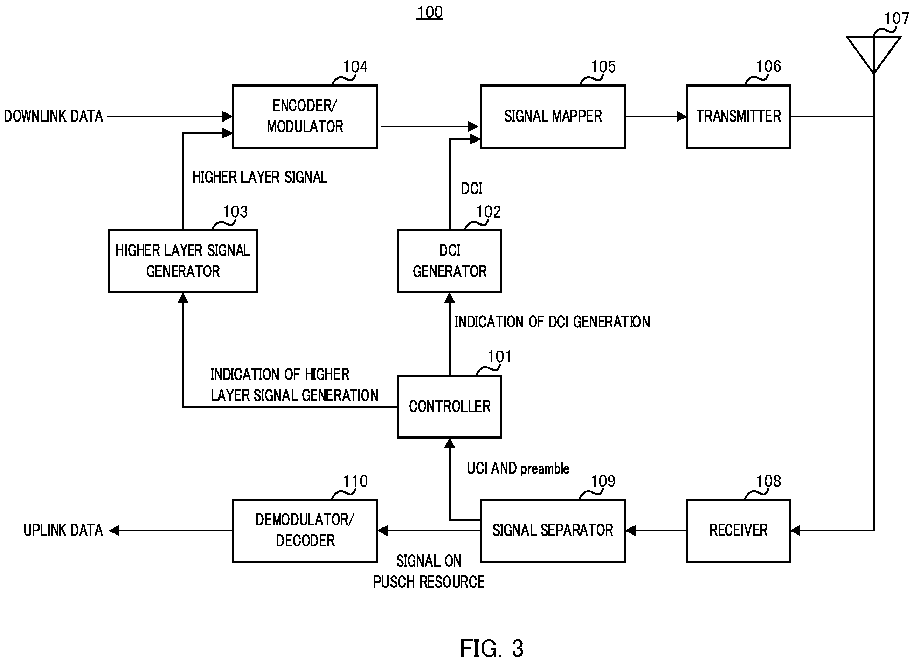

FIG. 3 is a block diagram illustrating an exemplary configuration of base station 100 according to the present embodiment. In FIG. 3, base station 100 includes controller 101, DCI generator 102, higher layer signal generator 103, encoder/modulator 104, signal mapper 105, transmitter 106, antenna 107, receiver 108, signal separator 109, and demodulator/decoder 110.

Controller 101 may, for example, determine a configuration of repetitive transmission of PUCCH. The configuration of repetitive transmission of PUCCH may include, for example, whether repetitive transmission of PUCCH is applied, and the number of PUCCH repetitive transmissions (e.g., also referred to as PUCCH repetition factor, repetition factor, or the number of repetition slots). For example, controller 101 may indicate generation of a higher layer signal (e.g., also referred to as higher layer parameter or higher layer signaling) to higher layer signal generator 103 based on information on the determined configuration of repetitive transmission. Further, controller 101 may, for example, indicate generation of control information (e.g., DCI) included in a downlink control channel (e.g., PDCCH) to DCI generator 102 based on the information on the determined configuration of repetitive transmission.

Furthermore, controller 101 may specify whether a downlink data channel (e.g., PDSCH) is successfully received at terminal 200, based on uplink control information (e.g., UCI: Uplink Control Information) inputted from signal separator 109. Moreover, controller 101 may perform random access processing based on a preamble (e.g., also referred to as Message 1 or Message A) inputted from signal separator 109.

For example, DCI generator 102 may generate DCI based on the indication from controller 101 and output the generated DCI to signal mapper 105.

Higher layer signal generator 103 may generate a higher layer signal such as system information based on the indication from controller 101 and output the generated higher layer signal to encoder/modulator 104, for example.

Encoder/modulator 104 may, for example, perform error correction coding and modulation on the downlink data (e.g., PDSCH) and the higher layer signal inputted from higher layer signal generator 103, and output the modulated signal to signal mapper 105.

For example, signal mapper 105 may map the DCI inputted from DCI generator 102 and the signal inputted from encoder/modulator 104 to resources. For example, signal mapper 105 may map the signal inputted from encoder/modulator 104 to a PDSCH resource and map the DCI to a PDCCH resource. Signal mapper 105 outputs the signal mapped to each resource to transmitter 106.

For example, transmitter 106 performs radio transmission processing including frequency conversion (e.g., up-conversion) that uses a carrier wave on the signal inputted from signal mapper 105, and outputs the signal after the radio transmission processing to antenna 107.

Antenna 107 radiates the signal (e.g., downlink signal) inputted from transmitter 106 toward terminal 200, for example. Further, antenna 107 receives an uplink signal transmitted from terminal 200, and outputs the uplink signal to receiver 108, for example.

The uplink signal may be, for example, a signal of a channel such as an uplink data channel (e.g., PUSCH), uplink control channel (e.g., PUCCH), or random access channel (e.g., physical random access channel (PRACH)).

For example, receiver 108 performs radio reception processing including frequency conversion (e.g., down-conversion) on the signal inputted from antenna 107, and outputs the signal after the radio reception processing to signal separator 109.

Signal separator 109 extracts (in other words, separates) a signal on a PUCCH resource (e.g., UCI) and a signal on a PRACH resource (e.g., preamble) from signals inputted from receiver 108, and outputs the signals to controller 101, for example. Further, signal separator 109 outputs, from signals inputted from receiver 108, a signal on a PUSCH resource to demodulator/decoder 110.

For example, demodulator/decoder 110 demodulates and decodes the signal inputted from signal separator 109, and outputs uplink data.

[Configuration of Terminal]

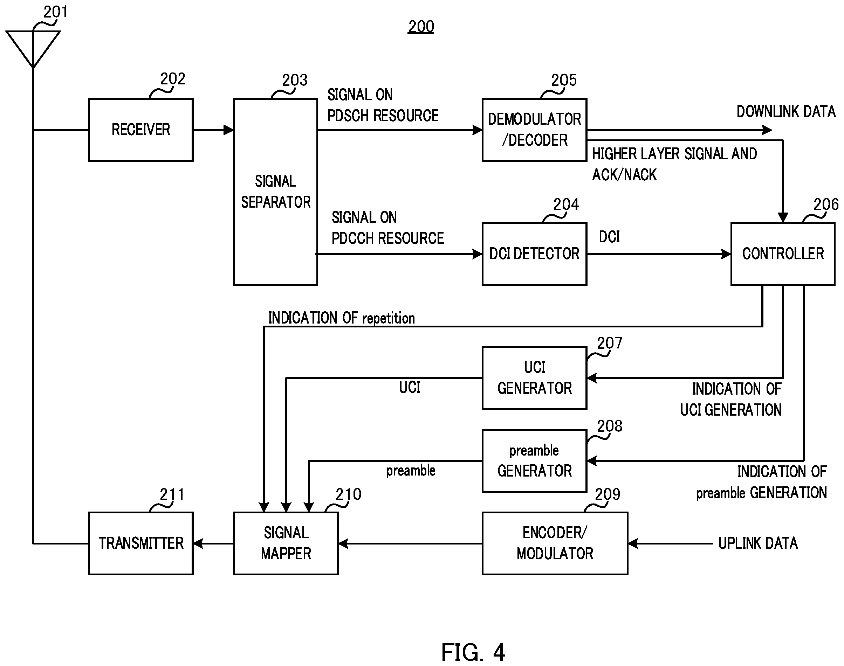

FIG. 4 is a block diagram illustrating an exemplary configuration of terminal 200 according to the present embodiment.

In FIG. 4, terminal 200 includes antenna 201, receiver 202, signal separator 203, DCI detector 204, demodulator/decoder 205, controller 206, UCI generator 207, preamble generator 208, encoder/modulator 209, signal mapper 210, and transmitter 211.

Antenna 201 receives a downlink signal transmitted by base station 100, and outputs the downlink signal to receiver 202. In addition, antenna 201 radiates an uplink signal inputted from transmitter 211 to base station 100.

For example, receiver 202 performs radio reception processing including frequency conversion (e.g., down-conversion) on the signal inputted from antenna 201, and outputs the signal after the radio reception processing to signal separator 203.

Signal separator 203 extracts (in other words, separates) a signal on a PDCCH resource from signals inputted from receiver 202 and outputs the signal to DCI detector 204, for example. Further, signal separator 203 outputs, from signals inputted from receiver 202, a signal on a PDSCH resource to demodulator/decoder 205.

For example, DCI detector 204 may detect DCI from the signal inputted from signal separator 203 (e.g., signal on a PDCCH resource). DCI detector 204 may output the detected DCI to controller 206, for example.

Demodulator/decoder 205, for example, performs demodulation and error correction decoding on the signal inputted from signal separator 203 (e.g., signal on a PDSCH resource), and obtains at least one of downlink data and/or a higher layer signal such as system information. Demodulator/decoder 205 may, for example, output the higher layer signal obtained by decoding to controller 206. Further, demodulator/decoder 205 may, for example, output information on a reception processing result (success or failure of reception) of a signal on a PDSCH resource (e.g., ACK/NACK) to controller 206.

Controller 206 may, for example, determine (or specify) a configuration of repetitive transmission of PUCCH (e.g., PUCCH repetition factor) based on at least one of the DCI inputted from DCI detector 204 and the higher layer signal (e.g., system information) inputted from demodulator/decoder 205. For example, controller 206 may indicate repetition of PUCCH based on the specified repetition factor. Further, controller 206 may, for example, indicate generation of UCI to UCI generator 207 based on the ACK/NACK inputted from demodulator/decoder 205. Furthermore, controller 206 may indicate generation of a preamble to preamble generator 208.

UCI generator 207 generates UCI in accordance with the indication of controller 206, and outputs the generated UCI to signal mapper 210, for example.

Preamble generator 208 generates a preamble in accordance with the indication of controller 206, and outputs the generated preamble to signal mapper 210, for example.

Encoder/modulator 209 may, for example, encode and modulate uplink data (e.g., PUSCH) and output the modulated signal to signal mapper 210.

Signal mapper 210 may, for example, apply repetition to PUCCH in accordance with the indication of repetition inputted from controller 206. Further, signal mapper 210 may, for example, map the UCI inputted from UCI generator 207 to a PUCCH resource. Further, signal mapper 210 may, for example, map the signal inputted from encoder/modulator 209 to a PUSCH resource. Furthermore, signal mapper 210 may, for example, map the preamble inputted from preamble generator 208 to a PRACH resource. Signal mapper 210 outputs the signal mapped to each resource to transmitter 211.

Transmitter 211 performs radio transmission processing including frequency conversion (e.g., up-conversion) on the signal inputted from signal mapper 210, and outputs the signal after the radio transmission processing to antenna 201, for example.

[Exemplary Operations of Base Station 100 and Terminal 200]

Next, exemplary operations of base station 100 and terminal 200 described above is described.

In the present embodiment, for example, information on a configuration of repetition of PUCCH for feedback for Msg. 4 PDSCH may be indicated to terminal 200 by DCI scheduling Msg. 4 PDSCH. The configuration of repetition of PUCCH may include, for example, the configuration of repetition factor.

For example, one or some fields of DCI may be redefined as a field that indicates repetition factor of PUCCH. For example, base station 100 may map information on repetition factor of PUCCH in a field redefined for PUCCH repetition factor among DCI fields. Terminal 200 may specify (or determine) information on the PUCCH repetition factor based on a value of the one or some fields redefined for PUCCH repetition factor among DCI fields.

This eliminates the need of newly defining a field for indicating PUCCH repetition factor in DCI, which can suppress an increase in overhead of DCI.

Hereinafter, Operation Examples 1-1 to 1-5 are described.

<Operation Example 1-1>

In Operation Example 1-1, repetition factor may be indicated using a "reserved bit" field included in DCI, for example.

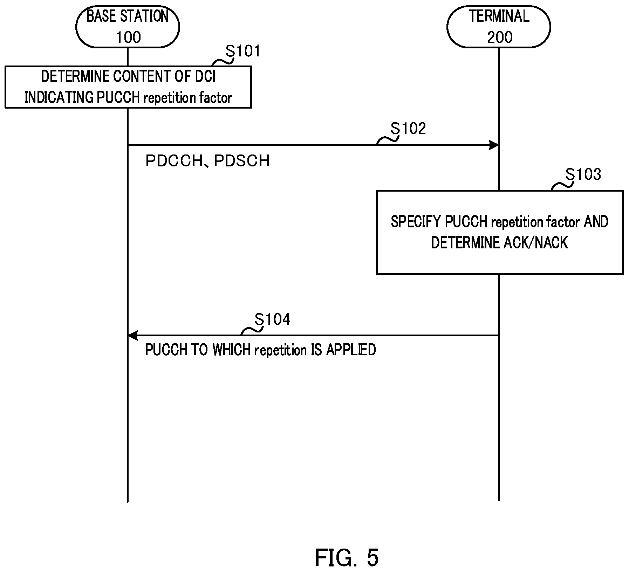

FIG. 5 is a sequence diagram illustrating exemplary processing performed by base station 100 and terminal 200.

<S101>

Base station 100 may, for example, determine a content of DCI (e.g., value of DCI field) that indicates repetition factor of PUCCH (e.g., the number of repetitive transmissions). For example, the DCI may be DCI format 1_0 with CRC scrambled by TC-RNTI.

Base station 100 may, for example, configure repetition factor of PUCCH using a reserved bit field among DCI fields. For example, the reserved bit field may be redefined (or replaced, read, or repurpose) as a field that indicates repetition factor of PUCCH.

As an example, the reserved bit may be two bits of a "Downlink assignment index (DAI)" field in DCI format 1_0.

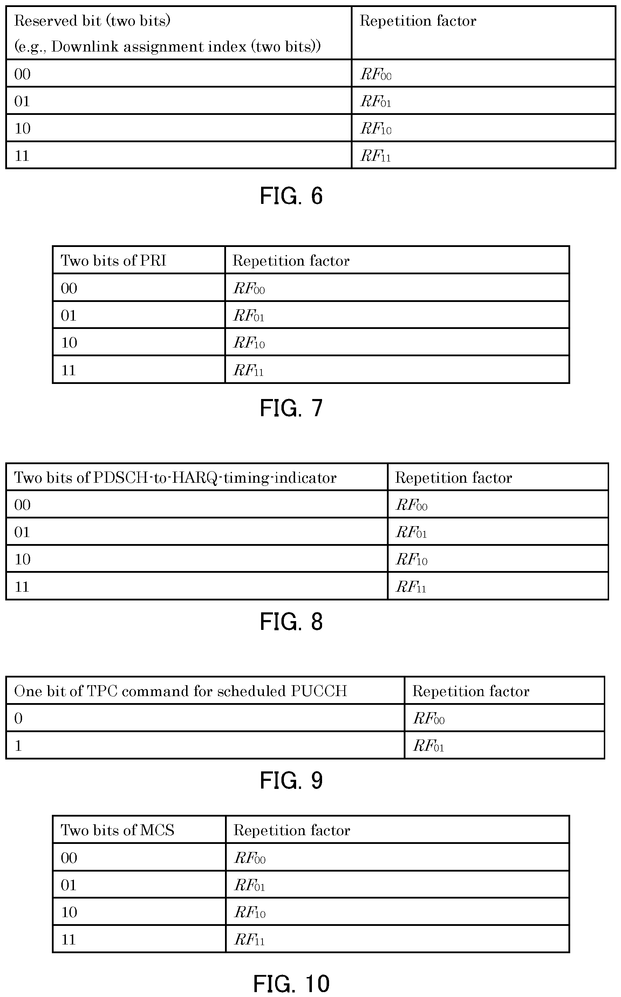

FIG. 6 illustrates an exemplary association between the reserved bit (e.g., two bits) and repetition factor in Operation Example 1-1. As illustrated in FIG. 6, each value (any of 00, 01, 10, and 11) of the two bits of the reserved bit field may be associated with repetition factor (any of $RF_{00}$, $RF_{01}$, $RF_{10}$ and $RF_{11}$).

<S102>

Base station 100 may, for example, transmit a signal of PDCCH including the DCI determined in S101 to terminal 200. Further, base station 100 may, for example, transmit a signal of PDSCH including Msg. 4 to terminal 200.
Terminal 200 may, for example, receive the DCI on the PDCCH and the Msg. 4 on the PDSCH.

<S103>

Terminal 200 may, for example, specify repetition factor of PUCCH based on the reserved bit field (e.g., bits of Downlink assignment index) used by base station 100 in S101 in the received DCI. For example, terminal 200 may specify repetition factor associated with the value of the received reserved bit field (e.g., value of two bits), based on the association between a reserved bit and repetition factor illustrated in FIG. 6.
Further, terminal 200 may, for example, attempt to decode the received PDSCH and determine information (e.g., ACK or NACK) on success or failure of the decoding (or success or failure of reception).

<S104>

Terminal 200 may, for example, control repetition of information (e.g., UCI) including ACK or NACK based on the repetition factor determined in S103. Further, for example, terminal 200 may transmit a signal of PUCCH to which repetition is applied, to base station 100 on a PUCCH resource. Base station 100 may, for example, receive the signal of PUCCH including ACK or NACK on the PUCCH resource based on the repetition factor determined in S101.
According to Operation Example 1-1, applying repetition of PUCCH for feedback for Msg. 4 PDSCH can improve reception performance of PUCCH at base station 100, for example.
Further, in Operation Example 1-1, a reserved bit is used for the indication of PUCCH repetition factor, so that indication of another information (e.g., scheduling of PDSCH) is not affected.

<Operation Example 1-2>

In Operation Example 1-2, repetition factor may be indicated using a "PRI" field, which is a field related to a PUCCH resource included in DCI.
Exemplary processing of base station 100 and terminal 200 according to Operation Example 1-2 may be the same as that of Operation Example 1-1 (e.g., FIG. 5).

<S101>

Base station 100 may, for example, determine a content of DCI (e.g., value of DCI field) that indicates repetition factor of PUCCH (e.g., the number of repetitive transmissions). For example, the DCI may be DCI format 1_0 with CRC scrambled by TC-RNTI.
Base station 100 may, for example, configure repetition factor of PUCCH using a part or all of a PRI field among DCI fields. For example, the part or all of the PRI field may be redefined (or replaced, read, or repurpose) as a field that indicates repetition factor of PUCCH.
As an example, some (e.g., two bits) of three bits of the PRI field in DCI format 1_0 may be used for indicating PUCCH repetition factor, or all (e.g., three bits) may be used.
FIG. 7 illustrates an exemplary association between two bits of a PRI field and repetition factor in Operation Example 1-2. As illustrated in FIG. 7, each set of two bits (any of 00, 01, 10 and 11) of PRI may be associated with repetition factor (any of $RF_{00}$, $RF_{01}$, $RF_{10}$ and $RF_{11}$).
Note that base station 100 may use the remaining bit (e.g., one bit in the example of FIG. 7) in the PRI field different from the bits used for the indication of PUCCH repetition factor, to indicate a PUCCH resource. For example, base station 100 may indicate a PUCCH resource to terminal 200 by combining the remaining bits of the PRI field and CCE index.

<S102>

Base station 100 may, for example, transmit a signal of PDCCH including the DCI determined in S101 and a signal of PDSCH including Msg. 4 to terminal 200. Terminal 200 may, for example, receive the DCI on the PDCCH and the Msg. 4 on the PDSCH.

\<S103\>

Terminal 200 may, for example, specify repetition factor of PUCCH based on a bit value of the part or all of the PRI field in the received DCI. For example, terminal 200 may specify repetition factor associated with the value of the two bits of the received PRI field, based on the association between two bits of the PRI field and repetition factor illustrated in FIG. 7.

Further, terminal 200 may, for example, specify a PUCCH resource based on the remaining bit different from some bits of the PRI field in the received DCI used for the indication of PUCCH repetition factor.

Further, terminal 200 may, for example, attempt to decode the received PDSCH and determine information (e.g., ACK or NACK) on success or failure of the decoding (or success or failure of reception).

\<S104\>

Terminal 200 may, for example, control repetition of information (e.g., UCI) including ACK or NACK based on the repetition factor determined in S103. Further, for example, terminal 200 may transmit a signal of PUCCH to which repetition is applied, to base station 100 on the PUCCH resource determined in S103. Base station 100 may receive, for example, the signal of PUCCH including ACK or NACK on the PUCCH resource, based on the repetition factor determined in S101 and the PUCCH resource.

According to Operation Example 1-2, applying repetition of PUCCH for feedback for Msg. 4 PDSCH can improve reception performance of PUCCH at base station 100, for example.

Further, in Operation Example 1-2, a PRI field for indicating a PUCCH resource (e.g., field related to PUCCH) is used for the indication of PUCCH repetition factor, so that indication of another information (e.g., scheduling of PDSCH) is not affected.

Note that, in Operation Example 1-2, a PUCCH resource need not be indicated in a PRI field. In this case, the PUCCH resource may be indicated to terminal 200 by another parameter different from PRI, such as a CCE index of PDCCH, may be predetermined, or may be indicated in advance to terminal 200 by a control signal such as SIB, RRC, or DCI, for example.

Further, for example, in the case that "X" bit(s) among a plurality of bits of a PRI field is used for the indication of repetition factor, a method for indicating a PUCCH resource may vary depending on the value of X. For example, a PUCCH resource index (e.g., $r_{PUCCH}$) may be calculated in accordance with the following Equation 1.

$$r_{PUCCH} = \left\lfloor \frac{2^{(X+1)} n_{CCE,0}}{N_{CCE,0}} \right\rfloor + 2^{(X+1)} \Delta_{PRI}$$

- $N_{CCE,0}$: Number of CCEs in control resource set of a PDCCH reception

- $n_{CCE,0}$: First CCE index for the PDCCH reception

- $\Delta_{PRI}$: Value of PUCCH resource indicator field

... (Equation 1)

\<Operation Example 1-3\>

In Operation Example 1-3, for example, repetition factor may be indicated using a "PDSCH-to-HARQ-timing indicator" field, which is a field related to a transmission timing of PUCCH included in DCI.

Exemplary processing of base station 100 and terminal 200 according to Operation Example 1-3 may be the same as that of Operation Example 1-1 (e.g., FIG. 5).

\<S101\>

Base station 100 may, for example, determine a content of DCI (e.g., value of DCI field) that indicates repetition factor of PUCCH (e.g., the number of repetitive transmissions). For example, the DCI may be DCI format 1_0 with CRC scrambled by TC-RNTI.

Base station 100 may, for example, configure repetition factor of PUCCH using a part or all of a PDSCH-to-HARQ-timing-indicator field among DCI fields. For example, the part or all of the PDSCH-to-HARQ-timing-indicator field may be redefined (or replaced, read, or repurpose) as a field that indicates repetition factor of PUCCH.

As an example, some (e.g., two bits) of three bits of the PDSCH-to-HARQ-timing-indicator field in DCI format 1_0 may be used for indicating PUCCH repetition factor, or all (e.g., three bits) may be used.

FIG. 8 illustrates an exemplary association between two bits of the PDSCH-to-HARQ-timing-indicator field and repetition factor in Operation Example 1-3. As illustrated in FIG. 8, each set of two bits (any of 00, 01, 10, and 11) of the PDSCH-to-HARQ-timing-indicator field may be associated with repetition factor (any of $RF_{00}$, $RF_{01}$, $RF_{10}$ and $RF_{11}$).

Note that, base station 100 may use the remaining bit (e.g., one bit in the example of FIG. 8) in the PDSCH-to-HARQ-timing-indicator field different from the bits used for the indication of PUCCH repetition factor, to indicate a timing of PUCCH, for example.

<S102>

Base station 100 may, for example, transmit a signal of PDCCH including the DCI determined in S101 and a signal of PDSCH including Msg. 4 to terminal 200. Terminal 200 may, for example, receive the DCI on the PDCCH and the Msg. 4 on the PDSCH.

<S103>

Terminal 200 may, for example, specify repetition factor of PUCCH based on a bit value of the part or all of the PDSCH-to-HARQ-timing-indicator field in the received DCI. For example, terminal 200 may specify repetition factor associated with the value of the two bits of the received PDSCH-to-HARQ-timing-indicator field, based on the association between two bits of the PDSCH-to-HARQ-timing-indicator field and repetition factor illustrated in FIG. 8.

Further, terminal 200 may, for example, specify a timing of PUCCH, for example, based on the remaining bit different from some bits of the PDSCH-to-HARQ-timing-indicator field in the received DCI used for the indication of repetition factor.

Further, terminal 200 may, for example, attempt to decode the received PDSCH and determine information (e.g., ACK or NACK) on success or failure of the decoding (or success or failure of reception).

<S104>

Terminal 200 may, for example, control repetition of information (e.g., UCI) including ACK or NACK based on the repetition factor determined in S103. Further, for example, terminal 200 may transmit a signal of PUCCH to which repetition is applied, to base station 100 based on the timing of PUCCH determined in S103. Base station 100 may, for example, receive the signal of PUCCH including ACK or NACK on the PUCCH resource based on the repetition factor determined in S101 and the timing of PUCCH.

According to Operation Example 1-3, applying repetition to PUCCH for feedback for Msg. 4 PDSCH can improve reception performance of PUCCH at base station 100, for example.

Further, in Operation Example 1-3, a PDSCH-to-HARQ-timing-indicator field (e.g., field related to PUCCH) for indicating a timing of PUCCH is used for the indication of PUCCH repetition factor, so that indication of another information (e.g., scheduling of PDSCH) is not affected.

Note that, in Operation Example 1-3, the timing of PUCCH need not be indicated in a PDSCH-to-HARQ-timing-indicator field. In this case, the timing of PUCCH may be predetermined, or may be indicated in advance to terminal 200 by a control signal such as SIB, RRC or DCI.

<Operation Example 1-4>

In Operation Example 1-4, for example, repetition factor may be indicated using a "TPC command for scheduled PUCCH" field, which is a field related to transmission power of PUCCH included in DCI.

Exemplary processing of base station 100 and terminal 200 according to Operation Example 1-4 may be the same as that of Operation Example 1-1 (e.g., FIG. 5).

<S101>

Base station 100 may, for example, determine a content of DCI (e.g., value of DCI field) that indicates repetition factor of PUCCH (e.g., the number of repetitive transmissions). For example, the DCI may be DCI format 1_0 with CRC scrambled by TC-RNTI.

Base station 100 may, for example, configure repetition factor of PUCCH using a part or all of the TPC command for scheduled PUCCH field among DCI fields. For example, the part or all of the TPC command for scheduled PUCCH field may be redefined (or replaced, read, or repurpose) as a field that indicates repetition factor of PUCCH.

As an example, one bit of two bits of the TPC command for scheduled PUCCH field in DCI format 1_0 may be used for indicating PUCCH repetition factor, or all (e.g., two bits) may be used.

FIG. 9 illustrates an exemplary association between one bit of the TPC command for scheduled PUCCH field and repetition factor in Operation Example 1-4. As illustrated in FIG. 9, each one bit (either 0 or 1) of the TPC command for scheduled PUCCH field may be associated with repetition factor (either $RF_{00}$ or $RF_{01}$).

Note that base station 100 may use the remaining bit (e.g., one bit in the example of FIG. 9) in the TPC command for scheduled PUCCH field different from the bits used for the indication of PUCCH repetition factor, to indicate transmission power of PUCCH, for example.

<S102>

Base station 100 may, for example, transmit a signal of PDCCH including the DCI determined in S101 and a signal of PDSCH including Msg. 4 to terminal 200. Terminal 200 may, for example, receive the DCI on the PDCCH and the Msg. 4 on the PDSCH.

<S103>

Terminal 200 may, for example, specify repetition factor of PUCCH based on a bit value of the part or all of the TPC command for scheduled PUCCH field in the received DCI. For example, terminal 200 may specify repetition factor associated with the value of the one bit of the received TPC command for scheduled PUCCH field based on the association between one bit of the TPC command for scheduled PUCCH field and repetition factor illustrated in FIG. 9.

Further, terminal 200 may, for example, specify transmission power of PUCCH based on the remaining bit different from some bits of the TPC command for scheduled PUCCH field in the received DCI used for the indication of repetition factor.

Further, terminal 200 may, for example, attempt to decode the received PDSCH and determine information (e.g., ACK or NACK) on success or failure of the decoding (or success or failure of reception).

<S104>

Terminal 200 may, for example, control repetition of information (e.g., UCI) including ACK or NACK based on the repetition factor determined in S103. Further, for example, terminal 200 may transmit a signal of PUCCH to which repetition is applied, to base station 100 based on the transmission power of PUCCH determined in S103. Base station 100 may, for example, receive the signal of PUCCH including ACK or NACK on the PUCCH resource based on the repetition factor and the transmission power of PUCCH determined in S101.

According to Operation Example 1-4, applying repetition of PUCCH for feedback for Msg. 4 PDSCH can improve reception performance of PUCCH at base station 100, for example.

Further, in Operation Example 1-4, a TPC command for scheduled PUCCH field (e.g., field related to PUCCH) for indicating transmission power of PUCCH is used for the indication of PUCCH repetition factor, so that indication of another information (e.g., scheduling of PDSCH) is not affected.

Note that, in Operation Example 1-4, transmission power of PUCCH need not be indicated in a TPC command for scheduled PUCCH field. In this case, the transmission power of PUCCH may be predetermined, or may be indicated in advance to terminal 200 by a control signal such as SIB, RRC or DCI. For example, the transmission power of PUCCH may be predetermined based on a parameter such as a value of maximum transmission power or Pcmax.

<Operation Example 1-5>

In Operation Example 1-5, for example, repetition factor may be indicated using a "Modulation and Coding Scheme (MCS)" field, which is a field related to a modulation scheme of PDSCH (e.g., Msg. 4) included in DCI.

Exemplary processing of base station 100 and terminal 200 according to Operation Example 1-4 may be the same as that of Operation Example 1-1 (e.g., FIG. 5).

<S101>

Base station 100 may, for example, determine a content of DCI (e.g., value of DCI field) that indicates repetition factor of PUCCH (e.g., the number of repetitive transmissions). For example, the DCI may be DCI format 1_0 with CRC scrambled by TC-RNTI.

Base station 100 may, for example, configure repetition factor of PUCCH using a part or all of an MCS field among DCI fields. For example, the part or all of the MCS field may be redefined (or replaced, read, or repurpose) as a field that indicates repetition factor of PUCCH.

As an example, some (e.g., two bits) of five bits of the MCS field in DCI format 1_0 may be used for indicating PUCCH repetition factor, or all (e.g., five bits) may be used.

FIG. 10 illustrates an exemplary association between two bits of the MCS field and repetition factor in Operation Example 1-5. As illustrated in FIG. 10, each set of two bits (any of 00, 01, 10 and 11) of the MCS may be associated with repetition factor (any of $RF_{00}$, $RF_{01}$, $RF_{10}$ and $RF_{11}$).

Note that base station 100 may use the remaining bits (e.g., three bits in the example of FIG. 10) in the MCS field different from the bits used for the indication of PUCCH repetition factor, to indicate a modulation scheme of PUSCH (or MCS), for example.

<S102>

Base station 100 may, for example, transmit a signal of PDCCH including the DCI determined in S101 and a signal of PDSCH including Msg. 4 to terminal 200. Terminal 200 may, for example, receive the DCI on the PDCCH and the Msg. 4 on the PDSCH.

<S103>

Terminal 200 may, for example, specify repetition factor of PUCCH based on a bit value of the part or all of the MCS field in the received DCI. For example, terminal 200 may specify repetition factor associated with the value of the two bits of the received MCS field, based on the association between two bits of the MCS field and repetition factor illustrated in FIG. 10.

Further, terminal 200 may, for example, specify a modulation scheme (or MCS) of PUSCH based on the remaining bits different from some bits of the MCS field in the received DCI used for the indication of repetition factor.

Further, terminal 200 may, for example, attempt to decode the received PDSCH and determine information (e.g., ACK or NACK) on success or failure of the decoding (or success or failure of reception).

<S104>

Terminal 200 may, for example, control repetition of information (e.g., UCI) including ACK or NACK based on the repetition factor determined in S103. Further, for example, terminal 200 may transmit a signal of PUCCH to which repetition is applied, to base station 100 on a PUCCH resource. Further, for example, terminal 200 may transmit a signal of PUSCH to base station 100 based on the modulation scheme of the PUSCH determined in S103.

Base station 100 may, for example, receive the signal of PUCCH including ACK or NACK on the PUCCH resource based on the repetition factor determined in S101, and receive the signal on the PUSCH resource based on the modulation scheme of the PUSCH determined in S101.

According to Operation Example 1-5, applying repetition to PUCCH for feedback for Msg. 4 PDSCH can improve reception performance of PUCCH at base station 100, for example.

Note that, in Operation Example 1-5, a modulation scheme of PUSCH need not be indicated in an MCS field. In this case, the modulation scheme of PUSCH may be predetermined, or may be indicated in advance to terminal 200 by a control signal such as SIB, RRC or DCI. To the modulation scheme (e.g., modulation order) of PUSCH in this case, a relatively low value (e.g., modulation order: less than four) may be configured. This increases the probability of receiving PUSCH (e.g., success rate of reception). Alternatively, to the modulation scheme of PUSCH in this case, a relatively high value (e.g., modulation order: higher than or equal to four) may be configured. This allows higher-speed communication.

Further, in Operation Example 1-5, a case has been described where the remaining bits (e.g., three bits in the example of FIG. 10) in the MCS field different from the bits used for the indication of PUCCH repetition factor are used to indicate a modulation scheme (or MCS) of PUSCH, but the present disclosure is not limited thereto. The remaining bits may be used to indicate a modulation scheme of PDSCH, for example. Alternatively, a modulation scheme of PDSCH need not be indicated in the MCS field. In this case, the modulation scheme of PDSCH may be predetermined, or may be indicated in advance to terminal 200 by a control signal such as SIB, RRC or DCI.

The exemplary operations of base station 100 and terminal 200 has been described thus far.

As described above, in the present embodiment, base station 100 indicates a configuration of PUCCH repetition for feedback for Msg. 4 PDSCH (downlink message) to terminal 200 using one or some fields of DCI corresponding to Msg. 4 PDSCH, for example. Terminal 200, for example, specifies the configuration of PUCCH repetition for feedback for Msg. 4 PDSCH based on the value of the one or some fields in DCI.

This makes it possible to configure repetition for PUCCH, thereby improving reception performance (e.g., coverage) of PUCCH at base station 100. Further, base station 100 can dynamically configure PUCCH repetition by DCI, and can indicate the configuration of PUCCH repetition individually for each of a plurality of terminals 200, for example. Thus, the flexibility of PUCCH repetition control can be enhanced.

Furthermore, one or some fields of DCI used for the indication of information related to the configuration of PUCCH repetition (e.g., repetition factor) may be a field related to a configuration different from the configuration of PUCCH repetition, for example. For example, one or some of the DCI fields may be redefined as a field used for indicating PUCCH repetition. This eliminates the need of newly configuring a field in DCI for indicating the configuration of PUCCH repetition. Thus, in the present embodiment, existing fields of DCI need not be changed even when PUCCH repetition is indicated to terminal 200 by DCI, which suppresses an increase in overhead of DCI.

Further, for example, a DCI field used (e.g., redefined) for indicating information related to the configuration of PUCCH repetition may be a field for indicating information related to uplink (e.g., uplink control signal such as PUCCH). This allows indication of PUCCH repetition configuration without affecting the scheduling of downlink (e.g., PUSCH).

Further, examples of a method for indicating PUCCH repetition based on the existing method of Rel. 15/16 NR include a method for specifying a combination of a PUCCH resource and repetition factor depending on a value of a PRI field indicating a PUCCH resource and a CCE index of CCE used for transmitting PDCCH including DCI. This method requires newly defining a PUCCH resource set including a combination of the existing PUCCH resource and newly configured repetition factor in a specification, or configuring the PUCCH resource set in terminal 200, whereas, in the present embodiment, the configuration of PUCCH repetition is configured in (or indicated to) terminal 200 separately from a PUCCH resource, and thus the definition of a PUCCH resource set in Rel. 15/16 NR need not be changed, for example. Further, the configuration of PUCCH repetition is indicated separately from a PUCCH resource, so that an increase in signaling overhead can be suppressed compared with a case where a combination of a PUCCH resource and repetition factor is indicated, for example.

Note that, in the present embodiment, CRC scrambled by RNTI different from TC-RNTI may be attached to DCI for scheduling Msg. 4 PDSCH, and a DCI format different from DCI format 1_0 may be configured.

Further, fixed values may be preconfigured to parameter values related to PUCCH repetition factor (e.g., $RF_{00}$, $RF_{01}$, $RF_{10}$, and $RF_{11}$) in each Operation Example according to the present embodiment, and the values may be indicated (or configured) in advance to terminal 200 by a control signal such as SIB, RRC, or DCI. Furthermore, values of $RF_{00}$, $RF_{01}$, $RF_{10}$, and $RF_{11}$ may be different from each other or may be partially the same. In addition, the names of the parameters are not limited to $RF_{00}$, $RF_{01}$, $RF_{10}$ and $RF_{11}$, and may be other names.

Further, in the present embodiment, a DCI field used for the indication of repetition factor is not limited to the fields described in the above Operation Examples, and may be another field. For example, repetition factor may be indicated by a field related to a configuration of PUCCH, or may be indicated by indication bits of another field. Furthermore, the number of bits used (redefined) for repetition factor in a field of DCI is not limited to the number described in each Operation Example described above, and may be another number of bits.

Moreover, another DCI field different from an MCS field may be used for the indication of PUCCH repetition factor, and the MCS field may be used for the indication of Msg. 3 PUSCH repetition factor. For example, base station 100 and terminal 200 may determine repetition factor of Msg. 3 PUSCH based on a value of an MCS field in RAR UL grant (e.g., also referred to as Message 2, Msg.2 or Msg2), and may determine repetition factor of PUCCH for Msg. 4 PDSCH based on a value of the one or some fields of DCI scheduling Msg. 4 PDSCH. The one or some fields of DCI scheduling Msg. 4 PDSCH may be herein a field different from the MCS field.

Further, in the present embodiment, bits of a plurality of fields in DCI may be combined (e.g., some of Operation Examples 1-1 to 1-5 are combined), and the bits may be used for the indication of repetition factor. For example, two bits of the reserved bit field and one bit of any of PRI, PDSCH-to-HARQ-timing-indicator, TPC command, and MCS fields are combined, and a total of three bits may be used for the indication of repetition factor. Note that the combination of fields in DCI is not limited thereto, and may be a combination of other fields. Further, the number of bits used for repetition factor of PUCCH in each field may be another number. This allows indication of various types of repetition factor compared to the Operation Examples, thereby enhancing the flexibility of PUCCH repetition control.

Further, in the present embodiment, at least one of a DCI field and the number of bits used for the indication of repetition factor may be individually configured for each format of PUCCH to which repetition is applied (e.g., PUCCH format 0, PUCCH format 1 or another format).

Further, in the present embodiment, cases (e.g., examples of FIGS. 6 to 10) have been described where repetition factor of PUCCH (e.g., the number of repetitive transmissions) is configured as a configuration content of PUCCH repetition indicated by one or some fields in DCI, but the configuration of PUCCH repetition indicated by one or some fields in DCI is not limited thereto, and may include whether PUCCH repetition is applied, for example.

(Embodiment 2)

Configurations of the base station and the terminal according to the present embodiment may be, for example, the same as the configurations in Embodiment 1.

In the present embodiment, for example, the information on the configuration of PUCCH repetition for feedback for Msg. B PDSCH may be indicated to terminal 200 by Medium Access Control (MAC) successRAR (or also referred to as successRAR) included in Msg. B. The configuration of repetition of PUCCH may include, for example, the configuration of repetition factor.

For example, one or some fields of successRAR may be redefined as a field that indicates repetition factor of PUCCH. For example, base station 100 may map information on repetition factor of PUCCH in a field redefined for PUCCH repetition factor among successRAR fields. Terminal 200 may specify (or determine) information on the PUCCH repetition factor based on a value of the one or some fields redefined for PUCCH repetition factor among successRAR fields.

This eliminates the need of newly defining a field for indicating PUCCH repetition factor in successRAR, which can suppress an increase in overhead of successRAR.

Hereinafter, Operation Examples 2-1 to 2-3 are described.

<Operation Example 2-1>

In Operation Example 2-1, repetition factor may be indicated using a "PRI" field, which is a field related to a PUCCH resource included in successRAR.

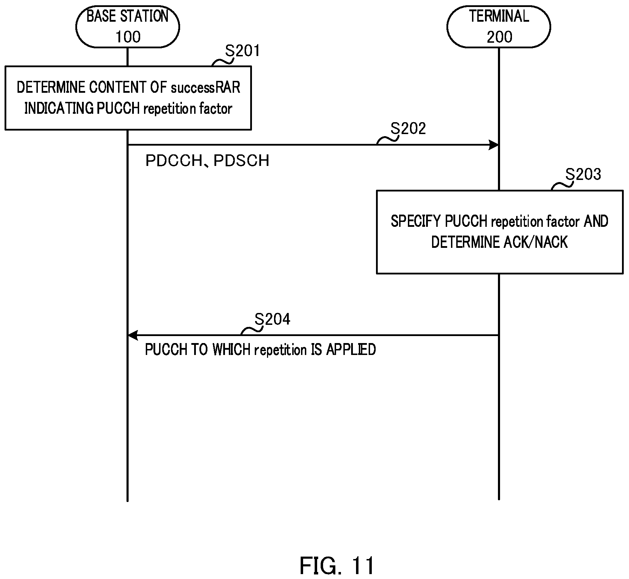

FIG. 11 is a sequence diagram illustrating exemplary processing of base station 100 and terminal 200.

<S201>

Base station 100 may, for example, determine a content of successRAR (e.g., value of successRAR field) indicating repetition factor of PUCCH (e.g., the number of repetitive transmissions).

Base station 100 may, for example, configure repetition factor of PUCCH using a part or all of a PRI field among successRAR fields. For example, the part or all of the PRI field may be redefined (or replaced, read, or repurpose) as a field that indicates repetition factor of PUCCH.

As an example, some (e.g., two bits) of four bits of the PRI field in successRAR may be used for indicating repetition factor of PUCCH, or all (e.g., four bits) may be used.

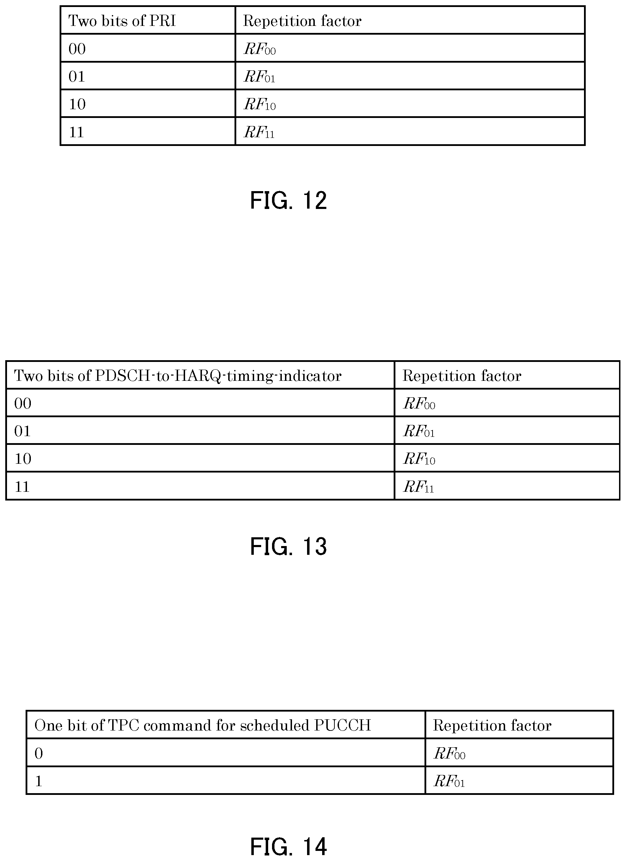

FIG. 12 illustrates an exemplary association between two bits of a PRI field and repetition factor in Operation Example 2-1. As illustrated in FIG. 12, each set of two bits (any of 00, 01, 10 and 11) of PRI may be associated with repetition factor (any of $RF_{00}$, $RF_{01}$, $RF_{10}$ and $RF_{11}$).

Note that base station 100 may use the remaining bits (e.g., two bits in the example of FIG. 12) in the PRI field different from the bits used for the indication of PUCCH repetition factor, to indicate a PUCCH resource. For example, base station 100 may indicate a PUCCH resource to terminal 200 by combining the remaining bits of the PRI field and CCE index.

<S202>

Base station 100 may, for example, transmit a signal of PDCCH including DCI and a signal of PDSCH including successRAR determined in S201 to terminal 200. Terminal 200 may, for example, receive the DCI on the PDCCH and the successRAR on the PDSCH. For example, the DCI may be DCI format 1_0 with CRC scrambled by MsgB-RNTI.

<S203>

Terminal 200 may, for example, specify repetition factor of PUCCH based on a bit value of the part or all of the PRI field in the received successRAR. For example, terminal 200 may specify repetition factor associated with the value of the two bits of the received PRI field, based on the association between two bits of the PRI field and repetition factor illustrated in FIG. 12.

Further, terminal 200 may, for example, specify a PUCCH resource based on the remaining bits different from some bits of the PRI field in the received successRAR used for the indication of PUCCH repetition factor.

Furthermore, terminal 200 may, for example, attempt to decode the received PDSCH and determine information (e.g., ACK or NACK) on success or failure of the decoding (or success or failure of reception).

<S204>

Terminal 200 may, for example, control repetition of information (e.g., UCI) including ACK or NACK based on the repetition factor determined in S203. Further, for example, terminal 200 may transmit a signal of PUCCH to which repetition is applied, to base station 100 on the PUCCH resource determined in S203. Base station 100 may receive, for example, the signal of PUCCH including ACK or NACK on the PUCCH resource, based on the repetition factor determined in S201 and the PUCCH resource.

According to Operation Example 2-1, applying repetition of PUCCH for feedback for Msg. B PDSCH can improve reception performance of PUCCH at base station 100, for example.

Further, in Operation Example 2-1, a PRI field for indicating a PUCCH resource (e.g., field related to PUCCH) is used for the indication of PUCCH repetition factor, so that indication of another information (e.g., scheduling of PDSCH) is not affected.

Note that, in Operation Example 2-1, a PUCCH resource need not be indicated in a PRI field. In this case, the PUCCH resource may be indicated to terminal 200 by another parameter different from PRI, such as a CCE index of PDCCH, may be predetermined, or may be indicated in advance to terminal 200 by a control signal such as SIB, RRC, or DCI, for example.

Further, for example, in the case that "X" bit(s) among a plurality of bits of a PRI field is used for the indication of repetition factor, a method for indicating a PUCCH resource may vary depending on the value of X. For example, a PUCCH resource index (e.g., $r_{PUCCH}$) may be calculated in accordance with Equation 1.

<Operation Example 2-2>

In Operation Example 2-2, repetition factor may be indicated using a "PDSCH-to-HARQ-timing indicator" field included in successRAR. The PDSCH-to-HARQ-timing indicator field is sometimes referred to as a HARQ Feedback Timing Indicator field, for example.

Exemplary processing of base station 100 and terminal 200 according to Operation Example 2-2 may be the same as that of Operation Example 2-1 (e.g., FIG. 11).

<S201>

Base station 100 may, for example, determine a content of successRAR (e.g., value of successRAR field) indicating repetition factor of PUCCH (e.g., the number of repetitive transmissions).

Base station 100 may, for example, configure repetition factor of PUCCH using a part or all of a PDSCH-to-HARQ-timing-indicator field among successRAR fields. For example, the part or all of the PDSCH-to-HARQ-timing-indicator field may be redefined (or replaced, read, or repurpose) as a field that indicates repetition factor of PUCCH.

As an example, some (e.g., two bits) of three bits of the PDSCH-to-HARQ-timing-indicator field in successRAR may be used for indicating PUCCH repetition factor, or all (e.g., three bits) may be used.

FIG. 13 illustrates an exemplary association between two bits of the PDSCH-to-HARQ-timing-indicator field and repetition factor in Operation Example 2-2. As illustrated in FIG. 13, each set of two bits (any of 00, 01, 10 and 11) of the PDSCH-to-HARQ-timing-indicator field may be associated with repetition factor (any of $RF_{00}$, $RF_{01}$, $RF_{10}$ and $RF_{11}$).

Note that, base station 100 may use the remaining bit (e.g., one bit in the example of FIG. 13) in the PDSCH-to-HARQ-timing-indicator field different from the bits used for the indication of PUCCH repetition factor, to indicate a timing of PUCCH, for example.

<S202>

Base station 100 may, for example, transmit a signal of PDCCH including DCI and a signal of PDSCH including successRAR determined in S201 to terminal 200. Terminal 200 may, for example, receive the DCI on the PDCCH and the successRAR on the PDSCH. For example, the DCI may be DCI format 1_0 with CRC scrambled by MsgB-RNTI.

<S203>

Terminal 200 may, for example, specify repetition factor of PUCCH based on a bit value of the part or all of the PDSCH-to-HARQ-timing-indicator field in the received successRAR. For example, terminal 200 may specify repetition factor associated with the value of the two bits of the received PDSCH-to-HARQ-timing-indicator field, based on the association between two bits of the PDSCH-to-HARQ-timing-indicator field and repetition factor illustrated in FIG. 13.

Further, terminal 200 may, for example, specify a timing of PUCCH based on the remaining bit different from some bits of the PDSCH-to-HARQ-timing-indicator field in the received successRAR used for the indication of repetition factor.

Furthermore, terminal 200 may, for example, attempt to decode the received PDSCH and determine information (e.g., ACK or NACK) on success or failure of the decoding (or success or failure of reception).

<S204>

Terminal 200 may, for example, control repetition of information (e.g., UCI) including ACK or NACK based on the repetition factor determined in S203. Further, for example, terminal 200 may transmit a signal of PUCCH to which repetition is applied, to base station 100 based on the timing of PUCCH determined in S203. Base station 100 may, for example, receive the signal of PUCCH including ACK or NACK on the PUCCH resource based on the repetition factor and the timing of PUCCH determined in S201.

According to Operation Example 2-2, applying repetition of PUCCH for feedback for Msg. B PDSCH can improve reception performance of PUCCH at base station 100, for example.

Further, in Operation Example 2-2, a PDSCH-to-HARQ-timing-indicator field (e.g., field related to PUCCH) for indicating a timing of PUCCH is used for the indication of PUCCH repetition factor, so that indication of another information (e.g., scheduling of PDSCH) is not affected.

Note that, in Operation Example 2-2, the timing of PUCCH need not be indicated in a PDSCH-to-HARQ-timing-indicator field. In this case, the timing of PUCCH may be predetermined, or may be indicated in advance to terminal 200 by a control signal such as SIB, RRC or DCI.

<Operation Example 2-3>

In Operation Example 2-3, repetition factor may be indicated using a "TPC command for scheduled PUCCH" field, which is included in successRAR and is a field related to transmission power for a PUCCH resource including ACK/NACK (HARQ feedback).

Exemplary processing of base station 100 and terminal 200 according to Operation Example 2-3 may be the same as that of Operation Example 2-1 (e.g., FIG. 11).

<S201>

Base station 100 may, for example, determine a content of successRAR (e.g., value of successRAR field) indicating repetition factor of PUCCH (e.g., the number of repetitive transmissions).

Base station 100 may, for example, configure PUCCH repetition factor using a part or all of the TPC command for scheduled PUCCH field among successRAR fields. For example, the part or all of the TPC command for scheduled PUCCH field may be redefined (or replaced, read, or repurpose) as a field that indicates repetition factor of PUCCH.

As an example, some (e.g., one bit) of two bits of the TPC command for scheduled PUCCH field may be used for indicating repetition factor of PUCCH, or all (e.g., two bits) may be used.

FIG. 14 illustrates an exemplary association between one bit of the TPC command for scheduled PUCCH field and repetition factor in Operation Example 2-3. As illustrated in FIG. 14, each one bit (either 0 or 1) of the TPC command for scheduled PUCCH field may be associated with repetition factor (either $RF_{00}$ or $RF_{01}$).

Note that base station 100 may use the remaining bit (e.g., one bit in the example of FIG. 14) in the TPC command for scheduled PUCCH field different from the bits used for the indication of PUCCH repetition factor, to indicate transmission power of PUCCH, for example.

<S202>

Base station 100 may, for example, transmit a signal of PDCCH including DCI and a signal of PDSCH including successRAR determined in S201 to terminal 200. Terminal 200 may, for example, receive the DCI on the PDCCH and the successRAR on the PDSCH. For example, the DCI may be DCI format 1_0 with CRC scrambled by MsgB-RNTI.

<S203>

Terminal 200 may, for example, specify repetition factor of PUCCH based on a bit value of the part or all of the TPC command for scheduled PUCCH field in the received successRAR. For example, terminal 200 may specify repetition factor associated with the value of the one bit of the received TPC command for scheduled PUCCH field, based on the association between one bit of the TPC command for scheduled PUCCH field and repetition factor illustrated in FIG. 14.

Further, terminal 200 may, for example, specify transmission power of PUCCH based on the remaining bit different from some bits of the TPC command for scheduled PUCCH field in the received successRAR used for the indication of repetition factor.

Furthermore, terminal 200 may, for example, attempt to decode the received PDSCH and determine information (e.g., ACK or NACK) on success or failure of the decoding (or success or failure of reception).

<S204>

Terminal 200 may, for example, control repetition of information (e.g., UCI) including ACK or NACK based on the repetition factor determined in S203. Further, for example, terminal 200 may transmit a signal of PUCCH to which repetition is applied, to base station 100 based on the transmission power of PUCCH determined in S203. Base station 100 may, for example, receive the signal of PUCCH including ACK or NACK on the PUCCH resource based on the repetition factor and the transmission power of PUCCH determined in S201.

According to Operation Example 2-3, applying repetition of PUCCH for feedback for Msg. B PDSCH can improve reception performance of PUCCH at base station 100, for example.

Further, in Operation Example 2-3, a TPC command for scheduled PUCCH field (e.g., field related to PUCCH) for indicating transmission power of PUCCH is used for the indication of PUCCH repetition factor, so that indication of another information (e.g., scheduling of PDSCH) is not affected.

Note that, in Operation Example 2-3, transmission power of PUCCH need not be indicated in a TPC command for scheduled PUCCH field. In this case, the transmission power of PUCCH may be predetermined, or may be indicated in advance to terminal 200 by a control signal such as SIB, RRC or DCI. For example, the transmission power of PUCCH may be predetermined based on a parameter such as a value of maximum transmission power or Pcmax.

The exemplary operations of base station 100 and terminal 200 has been described thus far.

As described above, in the present embodiment, base station 100 indicates a configuration of PUCCH repetition for feedback for Msg. B PDSCH (downlink message) to terminal 200 using one or some fields of successRAR corresponding to Msg. B PDSCH, for example. For example, terminal 200 specifies the configuration of PUCCH repetition for feedback for Msg. B PDSCH based on a value of one or some fields in successRAR.

This makes it possible to configure repetition for PUCCH, thereby improving reception performance (e.g., coverage) of PUCCH at base station 100. In addition, base station 100 can indicate the configuration of PUCCH repetition individually for each terminal 200 by successRAR, which enhances the flexibility of PUCCH repetition control.

Furthermore, one or some fields of successRAR used for the indication of information related to the configuration of PUCCH repetition (e.g., repetition factor) may be a field related to a configuration different from the configuration of PUCCH repetition, for example. For example, one or some of the fields in successRAR may be redefined as a field used for indicating PUCCH repetition. This eliminates the need of newly configuring a field in successRAR for indicating the configuration of PUCCH repetition. Thus, in the present embodiment, existing fields of successRAR need not be changed even when PUCCH repetition is indicated to terminal 200 by successRAR, which suppresses an increase in overhead of successRAR.

Further, for example, a successRAR field used (e.g., redefined) for indicating information related to the configuration of PUCCH repetition may be a field for indicating information related to uplink (e.g., uplink control signal such as PUCCH). This allows indication of PUCCH repetition configuration without affecting the scheduling of downlink (e.g., PUSCH).

Further, examples of a method for indicating PUCCH repetition based on the existing method of Rel. 15/16 NR include a method for specifying a combination of a PUCCH resource and repetition factor based on a value of a PRI field indicating a PUCCH resource and a CCE index of CCE used for transmitting PDCCH including DCI. This method requires newly defining a PUCCH resource set including a combination of the existing PUCCH resource and newly configured repetition factor in a specification, or configuring the PUCCH resource set in terminal 200, whereas, in the present embodiment, the configuration of PUCCH repetition is configured (or indicated) in terminal 200 separately from a PUCCH resource, and thus the definition of a PUCCH resource set in Rel. 15/16 NR need not be changed, for example. Further, the configuration of PUCCH repetition is indicated separately from a PUCCH resource, so that an increase in signaling overhead can be suppressed compared with a case where a combination of a PUCCH resource and repetition factor is indicated, for example.

Note that, in the present embodiment, CRC scrambled by RNTI different from MsgB-RNTI may be attached to DCI for scheduling Msg. B PDSCH, and a DCI format different from DCI format 1_0 may be configured.

Further, fixed values may be preconfigured to parameter values related to PUCCH repetition factor (e.g., $RF_{00}$, $RF_{01}$, $RF_{10}$, and $RF_{11}$) in each Operation Example according to the present embodiment, and the values may be indicated (or configured) in advance to terminal 200 by a control signal such as SIB, RRC, or DCI. Furthermore, $RF_{00}$, $RF_{01}$, $RF_{10}$, and $RF_{11}$ may be different from each other or may be partially the same. Further, the names of the parameters are not limited to $RF_{00}$, $RF_{01}$, $RF_{10}$ and $RF_{11}$, and may be other names.

Further, in the present embodiment, a successRAR field used for the indication of repetition factor is not limited to the fields described in the above Operation Examples, and may be another field. For example, repetition factor may be indicated by a field related to a configuration of PUCCH, or may be indicated by indication bits of another field. Furthermore, the number of bits used (redefined) for repetition factor in a field of successRAR is not limited to the number described in each Operation Example described above, and may be another number of bits.

In addition, successRAR may include a reserved bit field. In this case, some or all of bits of the reserved bit field may be used for the indication of repetition factor.

Further, in the present embodiment, bits of a plurality of fields in successRAR may be combined (e.g., some of Operation Examples 2-1 to 2-3 are combined), and the bits may be used for the indication of repetition factor. For example, two bits of the PRI field and one bit of either the PDSCH-to-HARQ-timing-indicator or TPC command field may be combined and a total of three bits may be used for the indication of repetition factor. Note that the combination of fields in successRAR is not limited thereto, and may be a combination of other fields. Further, the number of bits used for repetition factor of PUCCH in each field may be another number. This allows indication of various types of repetition factor compared to the Operation Examples, thereby enhancing the flexibility of PUCCH repetition control.

Further, in the present embodiment, at least one of a successRAR field and the number of bits used for the indication of repetition factor may be individually configured for each format of PUCCH to which repetition is applied (e.g., PUCCH format 0, PUCCH format 1, or another format).

Further, in the present embodiment, a case has been described in which successRAR is used for the indication of PUCCH repetition factor, but MAC message different from successRAR, another MAC PDU (Protocol Data Unit), MAC SDU (Service Data Unit), MAC CE (Control Element) may be used for the indication of PUCCH repetition factor.

Further, in the present embodiment, cases (e.g., examples of FIGS. 12 to 14) have been described where repetition factor of PUCCH (e.g., the number of repetitive transmissions) is configured as a configuration content of PUCCH repetition indicated by one or some fields in successRAR, but the configuration of PUCCH repetition indicated by one or some fields in successRAR is not limited thereto, and may include whether PUCCH repetition is applied, for example.

(Embodiment 3)

Configurations of the base station and the terminal according to the present embodiment may be, for example, the same as the configurations in Embodiment 1.

In the present embodiment, information on the configuration of PUCCH repetition, such as whether repetition of PUCCH is performed and repetition factor, may be implicitly indicated by information on PRACH, information on repetition of Msg.3 PUSCH, or a value of RNTI (identification information) used for scrambling in DCI.

Base station 100 and terminal 200 may, for example, determine the configuration of repetition of PUCCH (e.g., uplink control signal) for Msg. 4 PDSCH or Msg. B PDSCH in a random access procedure, based on at least one of information on PRACH, RNIT used for scrambling in DCI corresponding to Msg. 4 PDSCH or Msg. B PDSCH, and information on repetition of Msg. 3 PUSCH.

<PRACH resource or PRACH preamble>

For example, a particular type of PRACH resource (or also referred to as PRACH occasion) may be associated with repetition configuration of PUCCH. For example, terminal 200 may indicate (or request) at least one of whether PUCCH repetition is performed and repetition factor to base station 100 by transmitting a PRACH preamble (e.g., also referred to as Message 1) using a particular type of PRACH resource.

Alternatively, for example, a particular type of PRACH preamble and repetition configuration of PUCCH may be associated with each other. For example, terminal 200 may indicate (or request) at least one of whether PUCCH repetition is performed and repetition factor to base station 100 by transmitting a particular type of PRACH preamble.

For example, in order to indicate the configuration of "enabling of PUCCH repetition" and "repetition factor: 2," terminal 200 may use a PRACH resource or PRACH preamble associated in advance with the configuration. Terminal 200 may apply repetition that is based on "repetition factor: 2" to PUCCH in PUCCH transmission after the use of the particular PRACH resource or particular PRACH preamble. Note that the configuration of PUCCH repetition is not limited thereto, and another configuration may be applied.

Further, at this time, the configuration of PUCCH repetition (e.g., indication content) may be associated with "RedCap UE early indication," for example. For example, when terminal 200 uses a particular PRACH resource or PRACH preamble for indicating that terminal 200 is a "RedCap terminal," at least one of whether repetition of PUCCH is performed and repetition factor may be simultaneously indicated to base station 100.

As described above, associating information on PRACH and the configuration of PUCCH repetition allows terminal 200 to indicate the configuration of PUCCH repetition to base station 100 according to the resource or preamble used for the PRACH transmission, which suppresses an increase in the signaling for PUCCH repetition configuration.

<RNTI>

For example, a particular value of RNTI and the repetition configuration of PUCCH may be associated with each other. For example, the configuration of PUCCH repetition may vary depending on the value of RNTI.

For example, base station 100 may indicate at least one of whether PUCCH repetition is performed and repetition factor to terminal 200 by transmitting DCI with CRC scrambled by a particular value among a plurality of values (RNTI pool) of RNTI such as TC-RNTI, RA-RNTI and MsgB-RNTI.

For example, when terminal 200 receives DCI with CRC scrambled by a particular value among a plurality of values that RNTI may take, such as TC-RNTI, RA-RNTI and MsgB-RNTI, terminal 200 may specify that at least one configuration of whether PUCCH repetition is performed and repetition factor is indicated, and may apply repetition in the subsequent PUCCH transmission in accordance with the indicated configuration.

As described above, associating information on RNTI and the configuration of PUCCH repetition allows terminal 200 to specify PUCCH repetition configuration depending on the value of RNTI used for scrambling CRC attached to DCI, which suppresses an increase in the signaling for PUCCH repetition.

<PRACH repetition>

For example, a PRACH repetition configuration (e.g., at least one of whether PRACH repetition is performed and PRACH repetition level) and the repetition configuration of PUCCH may be associated with each other.

For example, base station 100 indicates the configuration of PRACH repetition (e.g., at least one of whether PRACH repetition is performed and PRACH repetition level) to terminal 200. For example, base station 100 may implicitly indicate to terminal 200 the configuration related to PUCCH repetition (e.g., at least one of whether PUCCH repetition is performed and repetition factor) by indicating the configuration related to repetition of PRACH.

For example, base station 100 may indicate to terminal 200 whether PRACH repetition is performed. At this time, terminal 200 may, for example, specify (or determine) whether PUCCH repetition is performed based on whether PRACH repetition is performed. For example, PUCCH repetition may be enabled when PRACH repetition is enabled, and PUCCH repetition may be disabled when PRACH repetition is disabled. Alternatively, PUCCH repetition may be disabled when PRACH repetition is enabled, and PUCCH repetition may be enabled when PRACH repetition is disabled.

Alternatively, base station 100 may, for example, indicate the number of PRACH repetitions (e.g., PRACH repetition level) "N rep PRACH" to terminal 200. At this time, terminal 200 may, for example, specify (or determine) the number of PUCCH repetitions (e.g., PUCCH repetition factor) "N_rep_PUCCH" based on the number of PRACH repetitions N_rep_PRACH. The value of N_rep_PUCCH may be the same as the value of N_rep_PRACH, may be greater than the value of N_rep_PRACH, or may be less than the value of N_rep_PRACH.

As described above, associating the configuration of PRACH repetition and the configuration of PUCCH repetition allows terminal 200 to specify a configuration of PUCCH repetition based on information on a configuration of PRACH repetition, which suppresses an increase in signaling for the configuration of PUCCH repetition.

<Msg.3 PUSCH repetition>

For example, a Msg.3 PUSCH repetition configuration (e.g., at least one of whether Msg.3 PUSCH repetition is performed and Msg.3 PUSCH repetition level) and a repetition configuration of PUCCH may be associated with each other.

Base station 100 indicates the configuration of Msg.3 PUSCH repetition (e.g., at least one of whether Msg.3 PUSCH repetition is performed and repetition level of Msg.3 PUSCH) to terminal 200. For example, base station 100 may implicitly indicate to terminal 200 the configuration related to PUCCH repetition (e.g., at least one of whether PUCCH repetition is performed and repetition factor) by indicating the configuration related to repetition of Msg.3 PUSCH.

For example, base station 100 may indicate to terminal 200 whether Msg.3 PUSCH repetition is performed. At this time, terminal 200 may specify (or determine) whether PUCCH repetition is performed, for example, based on whether Msg.3 PUSCH repetition is performed. For example, PUCCH repetition may be enabled when Msg.3 PUSCH repetition is enabled, and PUCCH repetition may be disabled when Msg.3 PUSCH repetition is disabled. Alternatively, PUCCH repetition may be disabled when Msg.3 PUSCH repetition is enabled, and PUCCH repetition may be enabled when Msg.3 PUSCH repetition is disabled.

Alternatively, base station 100 may, for example, indicate the number of Msg.3 PUSCH repetitions (e.g., Msg.3 PUSCH repetition level) "N_rep_Msg3" to terminal 200. At this time, terminal 200 may, for example, specify (or determine) the number of PUCCH repetitions (e.g., PUCCH repetition factor) "N rep PUCCH" based on the number of Msg.3 PUSCH repetitions N_rep_Msg3. The value of N_rep_PUCCH may be the same as the value of N_rep_Msg3, may be greater than the value of N_rep_Msg3, or may be less than the value of N_rep_Msg3.

As described above, associating the configuration of Msg.3 PUSCH repetition and the configuration of PUCCH repetition allows terminal 200 to specify a configuration of PUCCH repetition based on information on a configuration of Msg.3 PUSCH repetition, which suppresses an increase in signaling for the configuration of PUCCH repetition.

Note that the present embodiment may be applied in combination with Embodiment 1 and Embodiment 2 (or Embodiment 4 to be described later). For example, terminal 200 may determine a plurality of candidate values (configuration values) for the configuration of PUCCH repetition factor based on another information (e.g., information on PRACH, Msg.3 PUSCH, or RNTI) as in Embodiment 3, and determine any one of repetition factors actually applied among the plurality of candidates based on a value of one or some fields of DCI or successRAR as in Embodiment 1 or Embodiment 2.

(Embodiment 4)

Configurations of the base station and the terminal according to the present embodiment may be, for example, the same as the configurations in Embodiment 1.

In the present embodiment, for example, a configuration related to frequency hopping of PUCCH (e.g., whether frequency hopping is performed and hopping mode) may be indicated to terminal 200 together with a configuration related to PUCCH repetition.

Note that the hopping modes (also referred to as hopping types) may include, for example, intra-slot hopping and inter-slot hopping.

For example, base station 100 may, for example, indicate a configuration related to PUCCH repetition factor and a configuration related to PUCCH frequency hopping together to terminal 200 by using one or some fields of DCI or successRAR.

The one or some fields of DCI or successRAR may be at least one of reserved bit, PRI, PDSCH-to-HARQ-timing-indicator PUCCH, and TPC command for scheduled PUCCH fields as in Embodiment 1 or Embodiment 2, or may be another field different from those in Embodiment 1 and Embodiment 2.

Terminal 200 may, for example, determine a repetition configuration of PUCCH and a frequency hopping configuration of PUCCH based on a value of one or some fields in the received DCI or successRAR. For example, in the case that the value of one or some fields included in the received DCI or successRAR is a particular value, terminal 200 may specify both configurations of repetition factor and frequency hopping associated with the particular value. Terminal 200 may then control repetition and frequency hopping for PUCCH in accordance with the specified configurations.

This reduces overhead of a control signal for indicating whether frequency hopping is performed or a hopping mode, for example. Further, applying frequency hopping further improves reception performance of PUCCH, for example.

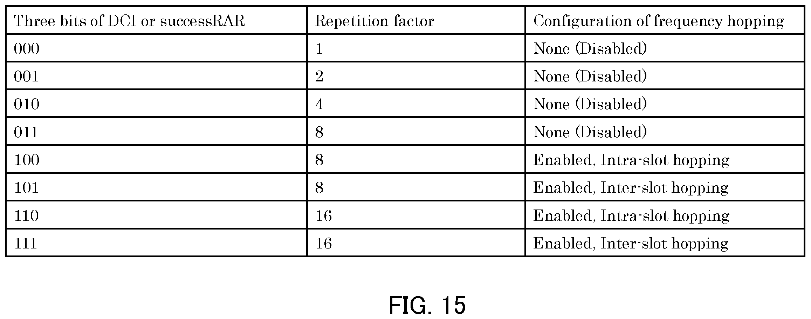

FIG. 15 illustrates an association between a value (e.g., three bits) of one or some fields of DCI or successRAR and a combination of PUCCH repetition factor and frequency hopping configurations.

For example, as illustrated in FIG. 15, a configuration (indication method) may be set in which frequency hopping is enabled when repetition factor is high (e.g., when repetition factor is higher than or equal to eight). This configuration allows simultaneous application of repetition and hopping, thereby further improving the reception performance of PUCCH.

Alternatively, a configuration (indication method) may be set in which frequency hopping is enabled when repetition factor is low (e.g., when repetition factor is less than eight). This configuration reduces the impact on other resources due to the occupation of PUCCH resources.

Further, repetition factor and a configuration of frequency hopping associated with the indication bit of DCI or successRAR may be predetermined, or may be indicated to terminal 200 in advance by a control signal.

Further, in the example illustrated in FIG. 15, a case has been described where both whether frequency hopping is performed and a hopping mode (intra-slot or inter-slot) are indicated by DCI or successRAR, but one of whether frequency hopping is performed and a hopping mode may be indicated by DCI or successRAR, and the other need not be indicated. In this case, the other information that is not indicated by DCI or successRAR may be indicated to terminal 200 by the following methods, for example.

- Use a particular PRACH resource or PRACH preamble
- Use a particular RNTI value
- Use a particular PRACH repetition configuration
- Use a particular PUCCH repetition configuration
- Use a particular PUSCH msg.3 repetition configuration
- Use a particular type of terminal (e.g., RedCap terminal)
- Use a particular MCS

The embodiment of the present disclosure has been described above.

In the above-described embodiments, a case has been described where terminal 200 transmits ACK/NACK in PUCCH, but the signal transmitted in PUCCH is not limited to ACK/NACK, and may be another signal. Examples of another signal may include another UCI such as Channel State Information (CSI) or Scheduling Request (SR).

Further, in the above-described embodiments, application of repetition or frequency hopping to PUCCH has been described, but a signal or channel in which repetition or frequency hopping is configured is not limited to PUCCH, and may be another signal or channel such as PUSCH or PRACH.

(Terminal Type and Identification)

The above-described embodiments may be applied to, for example, a "RedCap terminal" or a non-RedCap terminal.

Note that the RedCap terminal may be, for example, a terminal having at least one of the following characteristics (in other words, attributes or capabilities).

(1) A terminal that indicates (e.g., report), to base station 100, that the terminal is "a terminal targeted for coverage enhancement," "a terminal that receives a signal repeatedly transmitted", or "a RedCap terminal." Note that, for the above-described indication (report), an uplink channel such as a PRACH and PUSCH or an uplink signal such as a Sounding Reference Signal (SRS) may be used, for example.

(2) A terminal having at least one of the following capabilities, or a terminal reporting at least one of the following capabilities to base station 100. Note that, for the above-described report, an uplink channel such as a PRACH and PUSCH or an uplink signal such as UCI or SRS may be used, for example.

■ A terminal whose supportable frequency bandwidth is less than or equal to a threshold value (e.g., 20 MHz, 40 MHz, or 100 MHz)

■ A terminal in which the number of implemented reception antennae is less than or equal to a threshold value (e.g., threshold = 1)

■ A terminal in which the number of supportable downlink ports (e.g., the number of reception antenna ports) is less than or equal to a threshold value (e.g., threshold value = 2)

■ A terminal in which the number of supportable number of transmission ranks (e.g., the number of maximum Multiple-Input Multiple-Output (MIMO) layers (or the number of ranks) is less than or equal to a threshold value (e.g., threshold value = 2)

■ A terminal capable of transmitting and receiving a signal in a frequency band higher than or equal to a threshold value (e.g., Frequency Range 2 (FR2) or a band higher than or equal to 52 GHz)

■ A terminal whose processing time is longer than or equal to a threshold value

■ A terminal in which the available transport block size (TBS) is less than or equal to a threshold value

■ A terminal in which the number of available transmission ranks (e.g., the number of MIMO transmission layers) is less than or equal to a threshold value.

■ A terminal whose available modulation order is less than or equal to a threshold value

■ A terminal in which the number of available Hybrid Automatic Repeat request (HARQ) processes is less than or equal to a threshold value

■ A terminal that supports Rel-17 NR or later release

(3) A terminal to which a parameter corresponding to a RedCap mobile station is indicated from base station 100. Note that the parameter corresponding to the RedCap mobile station may include, for example, a parameter such as a Subscriber Profile ID for RAT/Frequency Priority (SPID).

Note that the "non-RedCap terminal" may mean, for example, a terminal that supports Rel-15/16 (e.g., terminal that does not support Rel-17) or a terminal that does not have the above-described characteristics even though the terminal supports Rel-17.

(Signal/Channel Type)

Note that, in the above-described embodiments, resource allocation for an uplink channel and signal (e.g., PUCCH) has been described, but the above-described embodiments may be applied to a downlink channel and signal (e.g., any of PUCCH, PUSCH, and PRACH) or another uplink channel and signal (e.g., any of PUSCH and PRACH).

Further, in the above embodiments, an example has been described in which the resource for the data signal (e.g., PDSCH or PUSCH) is assigned to terminal 200 by the PDCCH (e.g., downlink control information), but the present disclosure is not limited thereto, and may be configured by a higher layer signal, for example.

Furthermore, the PDCCH may be transmitted, for example, in either Common Search Space (CSS) or UE Specific Search Space (USS).

Further, the values of parameters such as repetition factor, the number of bits used for configuring PUCCH repetition, the number of bits of each field in DCI, or the number of bits of each field in successRAR applied in the description of the above-described embodiments are merely examples, and may be other values. Furthermore, the field configuration in DCI scheduling Msg. 4 PDSCH or the field configuration in successRAR are not limited to the above-described examples. For example, one or some fields need not be included, another field may be included, or the one or some fields may be replaced with another field.

Further, any component termed with a suffix, such as "-er," "-or," or "-ar" in the above-described embodiments may be replaced with other terms such as "circuit (circuitry)," "device," "unit," or "module."

(Supplement)

Information indicating whether terminal 200 supports the functions, operations, or processes described in the above-described embodiments may be transmitted (or indicated) from terminal 200 to base station 100 as capability information or a capability parameter of terminal 200.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, or processes described in the above-described embodiments, modifications, and supplements.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to a determination result based on the capability information. For example, base station 100 may control a configuration of an uplink channel such as PUCCH or an uplink signal (e.g., repetition configuration) based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

(Control Signal)

In the present disclosure, the downlink control signal (or downlink control information) relating to the exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that notified by the downlink control signal, but may be predefined in the specifications (or standard) or may be pre-configured for the base station and the terminal.

In the present disclosure, the uplink control signal (or uplink control information) relating to the exemplary embodiment of the present disclosure may be, for example, a signal (or information) transmitted in a PUCCH of the physical layer or a signal (or information) transmitted in the MAC CE or RRC of the higher layer. In addition, the signal (or information) is not limited to a case of being indicated by the uplink control signal and may be previously specified by the specifications (or standards) or may be previously configured in a base station and a terminal. Further, the uplink control signal may be replaced with, for example, uplink control information (UCI), 1st stage sidelink control information (SCI), or 2nd stage SCI.

(Base Station)

In the above embodiments, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

(Uplink/Downlink/Sidelink)

An exemplary embodiment of the present disclosure may be applied to, for example, any of an uplink, a downlink, and a sidelink. For example, an exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and PSBCH are examples of a broadcast channel, and the PRACH is an example of a random access channel.

(Data channel/Control channel)

An exemplary embodiment of the present disclosure may be applied to, for example, any of a data channel and a control channel. For example, a channel in an exemplary embodiment of the present disclosure may be replaced with any one of the PDSCH, the PUSCH, and the PSSCH being the data channels, or the PDCCH, the PUCCH, the PBCH, the PSCCH, and the PSBCH being the control channels.

(Reference Signal)

In an exemplary embodiment of the present disclosure, a reference signal is a signal known to both a base station and a mobile station and may also be referred to as a reference signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In an embodiment of the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above, and may be other numbers of symbols.

(Frequency Band)

An exemplary embodiment of the present disclosure may be applied to either a licensed band or an unlicensed band (unlicensed spectrum, shared spectrum). A channel access procedure (Listen Before Talk (LBT), carrier sense, and/or Channel Clear Assessment (CCA)) may be performed prior to transmission of each signal.

(Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, the PSSCH, the Physical Sidelink Feedback Channel (PSFCH), the PSBCH, the PDCCH, the PUCCH, the PDSCH, the PUSCH, or the PBCH.

Further, an exemplary embodiment of the present disclosure may be applied to either terrestrial networks or a non-terrestrial network (NTN) such as communication using a satellite or a high-altitude pseudolite (High Altitude Pseudo Satellite (HAPS)). Further, an exemplary embodiment of the present disclosure may be applied to a terrestrial network having a large transmission delay compared to the symbol length or slot length, such as a network with a large cell size and/or an ultra-wideband transmission network.

(Antenna Port)

In an exemplary embodiment of the present disclosure, the antenna port refers to a logical antenna (antenna group) configured of one or more physical antennae. For example, the antenna port does not necessarily refer to one physical antenna and may refer to an array antenna or the like configured of a plurality of antennae. In one example, the number of physical antennae configuring the antenna port need not be specified, and the antenna port may be specified as the minimum unit with which a terminal station can transmit a Reference signal. Moreover, the antenna port may be specified as the minimum unit for multiplying a weight of a Precoding vector.

<5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

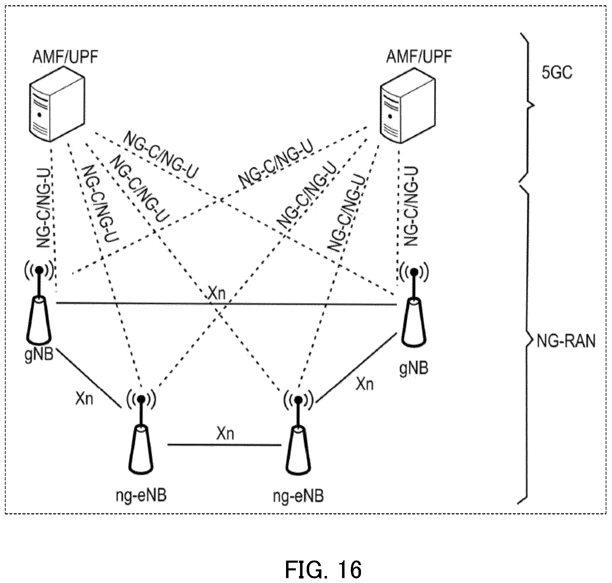

For example, the overall system architecture assumes a Next Generation-Radio Access Network (NG-RAN) that includes gNBs. The gNBs provide the NG-radio access user plane (SDAP/PDCP/RLC/MAC/PHY) and control plane (RRC) protocol terminations towards a UE. The gNBs are interconnected with each other via an Xn interface. The gNBs are also connected to the Next Generation Core (NGC) via the Next Generation (NG) interface, more specifically to the Access and Mobility Management Function (AMF; e.g. a particular core entity performing the AMF) via the NG-C interface, and to the User Plane Function (UPF; e.g., a particular core entity performing the UPF) via the NG-U interface. The NG-RAN architecture is illustrated in FIG. 16 (see, e.g., 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, e.g., clause 6.5 of 3GPP TS 38.300). A control plane protocol stack is also defined for NR (see, e.g., TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of UL and DL for user plane latency) and high reliability (1-10-5 within 1 ms). Finally, the mMTC may preferably require high connection density (1,000,000 devices/km$^2$ in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is identified based on the frequency index in the frequency domain and the symbol position in the time domain (see 3GPP TS 38.211 v15.6.0).

<5G NR Functional Split between NG-RAN and 5GC>

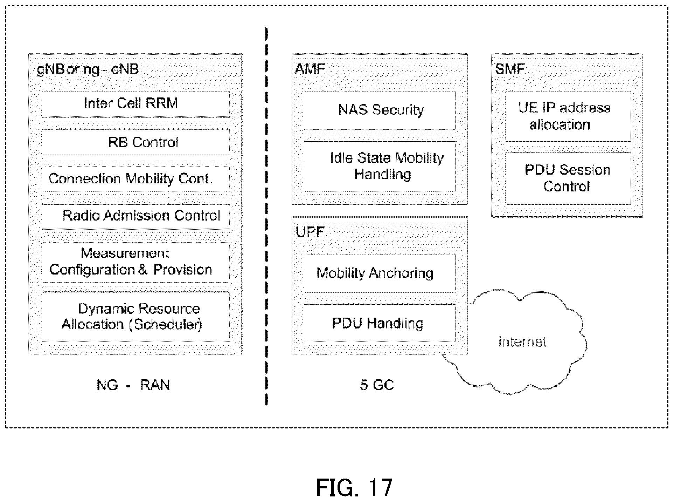

FIG. 17 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:

■ Functions for radio resource management such as radio bearer control, radio admission control, connection mobility control, dynamic allocation of resources to UEs in both uplink and downlink (scheduling);
- IP header compression, encryption, and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS Flow management and mapping to data radio bearers;
- Support of UEs in RRC_INACTIVE state;
- Distribution function for NAS messages;
- Radio access network sharing;
- Dual Connectivity; and
- Tight interworking between NR and E-UTRA.

The access and mobility management function (AMF) hosts the following main functions:

- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Furthermore, the user plane function (UPF) hosts the following main functions:

- Anchor point for intra-/inter-RAT mobility (when applicable);
- External protocol data unit (PDU) session point of interconnect to a data network;
- Packet routing and forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane (e.g. packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:

- Session management;
- UE IP address allocation and management;
- Selection and control of UPF;
- Configuration function of traffic steering at a user plane function (UPF) to route traffic to proper destination;
- Control part of policy enforcement and QoS; and
- Downlink data indication.

<RRC Connection Setup and Reconfiguration Procedures>

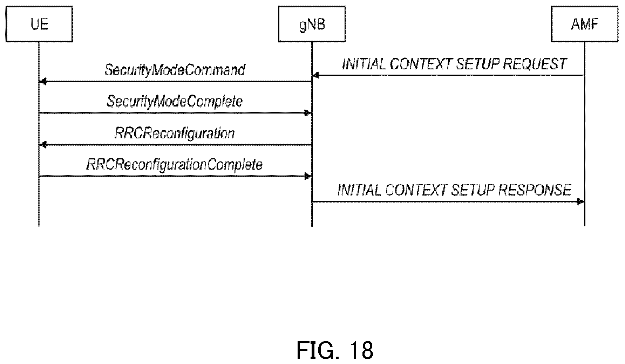

FIG. 18 illustrates some interactions between a UE, gNB, and AMF (a 5GC entity) in the context of a transition of the UE from RRC_IDLE to RRC _CONNECTED for the NAS part (see TS 38.300 v15.6.0).

RRC is a higher layer signaling (protocol) used for UE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the UE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and user equipment (UE). In particular, the gNodeB transmits a radio resource control (RRC) signaling containing a resource allocation configuration information element (IE) to the UE via the signaling radio bearer. The UE then performs an uplink transmission or a downlink reception based on the resource allocation configuration.

<Usage Scenarios of IMT for 2020 and beyond>

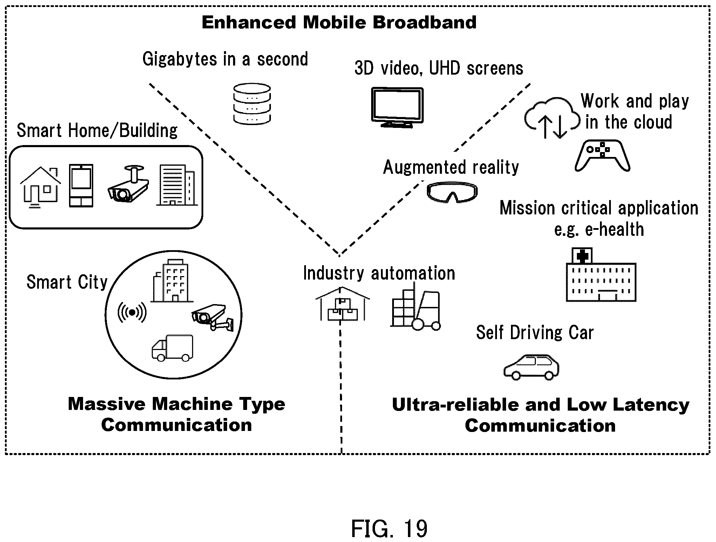

FIG. 19 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 19 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by identifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10-6 level), higher availability, packet size of up to 256 bytes, time synchronization down to the order of a few μs where the value can be one or a few μs depending on frequency range and short latency in the order of 0.5 to 1 ms (e.g., target user plane latency of 0.5 ms) depending on the use cases.

Moreover, for NR URLLC, several technology enhancements from the physical layer perspective have been identified. These technology enhancements include Physical Downlink Control Channel (PDCCH) enhancements related to compact DCI, PDCCH repetition, and increased PDCCH monitoring. In addition, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements have been identified. The term "mini-slot" refers to a transmission time interval (TTI) including a smaller number of symbols than a slot (a slot includes fourteen symbols).

<QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. A QoS flow is identified within a PDU session by a QoS flow ID (QFI) carried in an encapsulation header over the NG-U interface.

For each UE, the 5GC establishes one or more PDU sessions. For each UE, the NG-RAN establishes at least one Data Radio Bearer (DRB) together with the PDU session, for example as illustrated above with reference to FIG. 18. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate UL and DL packets with QoS flows, whereas AS-level mapping rules in the UE and in the NG-RAN associate UL and DL QoS flows with DRBs.

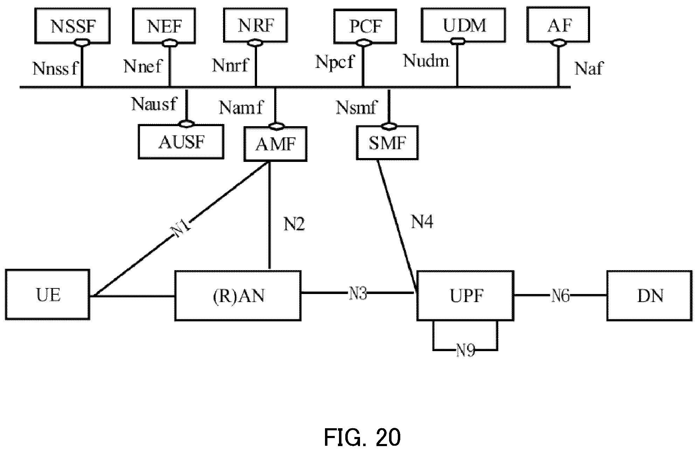

FIG. 20 illustrates a 5G NR non-roaming reference architecture (see TS 23.501 v16.1.0, section 4.23). An Application Function (AF, e.g., an external application server hosting 5G services exemplified in FIG. 19) interacts with the 3GPP core network in order to provide services, for example, to support application influence on traffic routing, accessing a Network Exposure Function (NEF) or interacting with the policy framework for policy control (see Policy Control Function, PCF), e.g., QoS control. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 20 illustrates further functional units of the 5G architecture, namely a Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture), is provided that includes a transmitter, which in operation, transmits a request containing a QoS requirement for at least one of the URLLC, eMMB, and mMTC services to at least one of functions (for example NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. The technique of implementing an integrated circuit is not limited to the LSI, however, and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to a non-limiting embodiment of the present disclosure includes: reception circuitry, which in operation, receives control information corresponding to a downlink message in a random access procedure; control circuitry, which in operation, determines a configuration of repetitive transmission of an uplink control signal for the downlink message based on a value of a field in the control information, the field being related to a configuration different from the configuration of repetitive transmission.

In the non-limiting embodiment of the present disclosure, the downlink message is Message 4, and the control information is downlink control information (DCI) scheduling the Message 4, and the control circuitry determines the configuration of repetitive transmission based on a value of one or some fields of the DCI.

In the non-limiting embodiment of the present disclosure, the one or some fields are included in at least one of a reserved bit field, a field related to the uplink control signal, and/or a field related to a modulation scheme of the Message 4.

In the non-limiting embodiment of the present disclosure, the field related to the uplink control signal is at least one of a field related to a resource, a field related to a transmission timing, and/or a field related to transmission power.

In the non-limiting embodiment of the present disclosure, the control circuitry determines a number of repetitive transmissions of Message 3 based on a value of a field related to a modulation scheme of Message 2, and determines a number of repetitive transmissions of the uplink control signal for the Message 4 based on the value of the one or some fields of the DCI.

In the non-limiting embodiment of the present disclosure, the one or some fields of the DCI are different from a field related to a modulation scheme of the Message 4.

In the non-limiting embodiment of the present disclosure, the downlink message is Message B, and the control information is successRAR included in the Message B, and the control circuitry determines the configuration of repetitive transmission based on a value of one or some fields of the successRAR.

In the non-limiting embodiment of the present disclosure, the one or some fields are at least one of a field related to the uplink control signal, a field related to a timing of the uplink control signal, and/or a field related to transmission power of the uplink control signal.

In the non-limiting embodiment of the present disclosure, the control circuitry determines a plurality of candidate values for the configuration of repetitive transmission based on at least one of information on a random access channel, identification information used for scrambling in the control information, and/or information on repetitive transmission of an uplink message, and determines any one of the plurality of candidate values based on the value of the field in the control information.

In the non-limiting embodiment of the present disclosure, the control circuitry determines the configuration of repetitive transmission and a configuration of frequency hopping of the uplink control signal based on the value of the field in the control information.

A terminal according to a non-limiting embodiment of the present disclosure includes: control circuitry, which in operation, determines a configuration of repetitive transmission of an uplink control signal for a downlink message in a random access procedure based on at least one of information on a random access channel, identification information used for scrambling in control information corresponding to the downlink message, and/or information on repetitive transmission of an uplink message; and transmission circuitry, which in operation, transmits the uplink control signal based on the configuration.

A base station according to a non-limiting embodiment of the present disclosure includes: transmission circuitry, which in operation, transmits control information corresponding to a downlink message in a random access procedure; and control circuitry, which in operation, determines a configuration of reception of a repetitive transmission of an uplink control signal for the downlink message based on a value of a field in the control information, the field being related to a configuration different from a configuration of the repetitive transmission.

A base station according to a non-limiting embodiment of the present disclosure includes: control circuitry, which in operation, determines a configuration of reception of a repetitive transmission of an uplink control signal for a downlink message in a random access procedure based on at least one of information on a random access channel, identification information used for scrambling in control information corresponding to the downlink message, and/or information on repetitive transmission of an uplink message; and reception circuitry, which in operation, receives the uplink control signal based on the configuration.

In a communication method according to a non-limiting embodiment of the present disclosure, a terminal receives control information corresponding to a downlink message in a random access procedure, and determines a configuration of repetitive transmission of an uplink control signal for the downlink message based on a value of a field in the control information, the field being related to a configuration different from the configuration of repetitive transmission.

In a communication method according to a non-limiting embodiment of the present disclosure, a terminal determines a configuration of repetitive transmission of an uplink control signal for a downlink message in a random access procedure based on at least one of information on a random access channel, identification information used for scrambling in control information corresponding to the downlink message, and/or information on repetitive transmission of an uplink message, and transmits the uplink control signal based on the configuration.

In a communication method according to a non-limiting embodiment of the present disclosure, a base station transmits control information corresponding to a downlink message in a random access procedure, and determines a configuration of reception of a repetitive transmission of an uplink control signal for the downlink message based on a value of a field in the control information, the field being related to a configuration different from a configuration of the repetitive transmission.

In a communication method according to a non-limiting embodiment of the present disclosure, a base station determines a configuration of reception of a repetitive transmission of an uplink control signal for a downlink message in a random access procedure based on at least one of information on a random access channel, identification information used for scrambling in control information corresponding to the downlink message, and/or information on repetitive transmission of an uplink message, and receives the uplink control signal based on the configuration.

The disclosure of Japanese Patent Application No. 2022-007977, filed on January 21, 2022, including the specification, drawings and abstract, is incorporated herein by reference in its entirety.

Industrial Applicability

An exemplary embodiment of the present disclosure is useful for radio communication systems.

Reference Signs List

100 Base station
101, 206 Controller
102 DCI generator
103 Higher layer signal generator
104, 209 Encoder/modulator
105, 210 Signal mapper
106, 211 Transmitter
107, 201 Antenna
108, 202 Receiver
109 Signal separator
110, 205 Demodulator/decoder
200 Terminal
203 Signal separator
204 DCI detector

207 UCI generator
208 Preamble generator

## Claims

1.  A terminal, comprising:

    reception circuitry, which in operation, receives control information corresponding to a downlink message in a random access procedure;
    control circuitry, which in operation, determines a configuration of repetitive transmission of an uplink control signal for the downlink message based on a value of a field in the control information, the field being related to a configuration different from the configuration of repetitive transmission.

2.  The terminal according to claim 1, wherein

    the downlink message is Message 4, and the control information is downlink control information (DCI) scheduling the Message 4, and
    the control circuitry determines the configuration of repetitive transmission based on a value of one or some fields of the DCI.

3.  The terminal according to claim 2, wherein
    the one or some fields are included in at least one of a reserved bit field, a field related to the uplink control signal, and/or a field related to a modulation scheme of the Message 4.

4.  The terminal according to claim 3, wherein
    the field related to the uplink control signal is at least one of a field related to a resource, a field related to a transmission timing, and/or a field related to transmission power.

5.  The terminal according to claim 2, wherein
    the control circuitry determines a number of repetitive transmissions of Message 3 based on a value of a field related to a modulation scheme of Message 2, and determines a number of repetitive transmissions of the uplink control signal for the Message 4 based on the value of the one or some fields of the DCI.

6.  The terminal according to claim 5, wherein
    the one or some fields of the DCI are different from a field related to a modulation scheme of the Message 4.

7.  The terminal according to claim 1, wherein

    the downlink message is Message B, and the control information is successRAR included in the Message B, and
    the control circuitry determines the configuration of repetitive transmission based on a value of one or some fields of the successRAR.

8.  The terminal according to claim 7, wherein
    the one or some fields are at least one of a field related to the uplink control signal, a field related to a timing of the uplink control signal, and/or a field related to transmission power of the uplink control signal.

9.  The terminal according to claim 1, wherein
    the control circuitry determines a plurality of candidate values for the configuration of repetitive transmission based on at least one of information on a random access channel, identification information used for scrambling in the control information, and/or information on repetitive transmission of an uplink message, and determines any one of the plurality of candidate values based on the value of the field in the control information.

10. The terminal according to claim 1, wherein
    the control circuitry determines the configuration of repetitive transmission and a configuration of frequency hopping of the uplink control signal based on the value of the field in the control information.

11. A base station, comprising:

transmission circuitry, which in operation, transmits control information corresponding to a downlink message in a random access procedure; and

control circuitry, which in operation, determines a configuration of reception of a repetitive transmission of an uplink control signal for the downlink message based on a value of a field in the control information, the field being related to a configuration different from a configuration of the repetitive transmission.

12. A communication method, comprising:

receiving, by a terminal, control information corresponding to a downlink message in a random access procedure;

determining, by the terminal, a configuration of repetitive transmission of an uplink control signal for the downlink message based on a value of a field in the control information, the field being related to a configuration different from the configuration of repetitive transmission.

13. A communication method, comprising:

transmitting, by a base station, control information corresponding to a downlink message in a random access procedure; and

determining, by the base station, a configuration of reception of a repetitive transmission of an uplink control signal for the downlink message based on a value of a field in the control information, the field being related to a configuration different from a configuration of the repetitive transmission.

100

101

CONTROLLER

106

TRANSMITTER

FIG. 1

200

207

CONTROLLER

202

RECEIVER

FIG. 2

FIG. 3

FIG. 4

EP 4 468 806 A1

FIG. 5

EP 4 468 806 A1

| Reserved bit (two bits) (e.g., Downlink assignment index (two bits)) | Repetition factor |
|---|---|
| 00 | $RF_{00}$ |
| 01 | $RF_{01}$ |
| 10 | $RF_{10}$ |
| 11 | $RF_{11}$ |

FIG. 6

| Two bits of PRI | Repetition factor |
|---|---|
| 00 | $RF_{00}$ |
| 01 | $RF_{01}$ |
| 10 | $RF_{10}$ |
| 11 | $RF_{11}$ |

FIG. 7

| Two bits of PDSCH-to-HARQ-timing-indicator | Repetition factor |
|---|---|
| 00 | $RF_{00}$ |
| 01 | $RF_{01}$ |
| 10 | $RF_{10}$ |
| 11 | $RF_{11}$ |

FIG. 8

| One bit of TPC command for scheduled PUCCH | Repetition factor |
|---|---|
| 0 | $RF_{00}$ |
| 1 | $RF_{01}$ |

FIG. 9

| Two bits of MCS | Repetition factor |
|---|---|
| 00 | $RF_{00}$ |
| 01 | $RF_{01}$ |
| 10 | $RF_{10}$ |
| 11 | $RF_{11}$ |

FIG. 10

EP 4 468 806 A1

```
┌─────────────┐                              ┌──────────┐
│ BASE STATION│                              │ TERMINAL │
│     100     │                              │   200    │
└──────┬──────┘                              └─────┬────┘
       │          S201                             │
  ┌────┴─────────────────────────────┐             │
  │ DETERMINE CONTENT OF successRAR   │             │
  │ INDICATING PUCCH repetition factor│             │
  └────┬─────────────────────────────┘             │
       │              S202                          │
       │─────────────────────────────────────────>│
       │        PDCCH、PDSCH                        │
       │                                            │     S203
       │                                ┌───────────┴──────────────┐
       │                                │ SPECIFY PUCCH repetition  │
       │                                │ factor AND                │
       │                                │ DETERMINE ACK/NACK        │
       │                                └───────────┬──────────────┘
       │              S204                          │
       │<───────────────────────────────────────────│
       │  PUCCH TO WHICH repetition IS APPLIED      │
       │                                            │
```

FIG. 11

| Two bits of PRI | Repetition factor |
|---|---|
| 00 | $RF_{00}$ |
| 01 | $RF_{01}$ |
| 10 | $RF_{10}$ |
| 11 | $RF_{11}$ |

FIG. 12

| Two bits of PDSCH-to-HARQ-timing-indicator | Repetition factor |
|---|---|
| 00 | $RF_{00}$ |
| 01 | $RF_{01}$ |
| 10 | $RF_{10}$ |
| 11 | $RF_{11}$ |

FIG. 13

| One bit of TPC command for scheduled PUCCH | Repetition factor |
|---|---|
| 0 | $RF_{00}$ |
| 1 | $RF_{01}$ |

FIG. 14

| Three bits of DCI or successRAR | Repetition factor | Configuration of frequency hopping |
|---|---|---|
| 000 | 1 | None (Disabled) |
| 001 | 2 | None (Disabled) |
| 010 | 4 | None (Disabled) |
| 011 | 8 | None (Disabled) |
| 100 | 8 | Enabled, Intra-slot hopping |
| 101 | 8 | Enabled, Inter-slot hopping |
| 110 | 16 | Enabled, Intra-slot hopping |
| 111 | 16 | Enabled, Inter-slot hopping |

FIG. 15

EP 4 468 806 A1

FIG. 16

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

internet

SMF

UE IP address
allocation

PDU Session
Control

5 GC

FIG. 17

UE | gNB | AMF

INITIAL CONTEXT SETUP REQUEST

SecurityModeCommand

SecurityModeComplete

RRCReconfiguration

RRCReconfigurationComplete

INITIAL CONTEXT SETUP RESPONSE

FIG. 18

FIG. 19

FIG. 20

## INTERNATIONAL SEARCH REPORT

| International application No. |
|---|
| **PCT/JP2022/037063** |

**A. CLASSIFICATION OF SUBJECT MATTER**

*H04W 72/0446*(2023.01)i; *H04W 72/20*(2023.01)i; *H04W 74/08*(2009.01)i; *H04W 28/04*(2009.01)i
FI: H04W72/04 131; H04W74/08; H04W72/04 136; H04W28/04 110

According to International Patent Classification (IPC) or to both national classification and IPC

**B. FIELDS SEARCHED**

Minimum documentation searched (classification system followed by classification symbols)

H04W72/04; H04W28/04; H04W74/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2021/0195653 A1 (QUALCOMM INC.) 24 June 2021 (2021-06-24) paragraphs [0126], [0139], [0152]-[0155] | 1, 2, 7, 10-13 |
| Y | | 3-6, 8, 9 |
| Y | Xiaomi, Discussion on PUCCH enhancements, 3GPP TSG RAN WG1 #106-e R1-2107938, 07 August 2021, pp. 1-4 in particular, 2.1 | 3, 4, 8 |
| Y | WO 2021/257951 A1 (OFINNO, LLC) 23 December 2021 (2021-12-23) paragraph [0351] | 3, 4, 8 |
| Y | US 2020/0221317 A1 (LG ELECTRONICS INC.) 09 July 2020 (2020-07-09) paragraphs [0328]-[0330] | 3, 4, 8 |
| Y | JP 2021-532652 A (SONY GROUP CORP.) 25 November 2021 (2021-11-25) paragraph [0072] | 3, 4 |
| Y | CMCC, Remaining issues on type A PUSCH repetitions for Msg3, 3GPP TSG RAN WG1 #107b-e R1-2200592, 11 January 2022, pp. 1-5 in particular, 2.1, 2.2 | 5, 6, 9 |

☐ Further documents are listed in the continuation of Box C.　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/037063**

| Patent document cited in search report | | | Publication date (day/month/year) | Patent family member(s) | | | Publication date (day/month/year) |
|---|---|---|---|---|---|---|---|
| US | 2021/0195653 | A1 | 24 June 2021 | WO 2021/133638 A1 paragraphs [0126], [0139], [0152]-[0155] TW 202133673 A | | | |
| WO | 2021/257951 | A1 | 23 December 2021 | (Family: none) | | | |
| US | 2020/0221317 | A1 | 09 July 2020 | EP 3113404 A1 paragraphs [0290]-[0292] WO 2015/126202 A1 | | | |
| JP | 2021-532652 | A | 25 November 2021 | US 2021/0298054 A1 paragraph [0098] WO 2020/020815 A1 CN 112534930 A | | | |

Form PCT/ISA/210 (patent family annex) (January 2015)

45

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022007977 A

**Non-patent literature cited in the description**

- **NTT DOCOMO**. Revised WID on New Radio Access Technology. *RP-181726*, September 2018
- **ERICSSON**. New SID on Support of Reduced Capability NR Devices. *RP-19323 8*, December 2019
- NR; Physical layer procedures for control (Release 16). *3GPP TS 38.213 V16.8.0*, December 2021